# EUROPEAN PATENT APPLICATION

(11) **EP 4 566 994 A1**
(43) Date of publication of application: **11.06.2025**
(21) Application number: 23850099.5
(22) Date of filing: 01.08.2023
(51) Int. Cl.: C01F 7/04, C01F 7/42

(54) **METHOD FOR PRODUCING IOTA-ALUMINA, AND IOTA-ALUMINA**

(30) Priority: 02.08.2022 JP 2022123428
(71) Applicant: Nippon Light Metal Company, Ltd., Tokyo 105-8681 (JP)
(72) Inventor: SUGITA, Kaoru, Shizuoka-shi, Shizuoka 421-3291 (JP); OOTA, Yuji, Shizuoka-shi, Shizuoka 421-3291 (JP); ABE, Rene Yo, Shizuoka-shi, Shizuoka 421-3291 (JP)
(74) Representative: Hoffmann Eitle
(86) International application number: PCT/JP2023/028191
(87) International publication number: WO 2024/029545

(57) **Abstract**

An iota alumina is produced by a low temperature, simple method. The method for producing an iota alumina has: a reaction step at which solid raw materials including an alkali metal compound, a fluoride, and at least one or more selected from an aluminum compound and aluminum are mixed and heat-treated; and a washing step at which a product generated at the reaction step is charged into a polar solvent.

## Description

### Field

The present invention relates to a method for producing an iota alumina and an iota alumina.

### Background

In the past, in the method for producing an iota alumina, for example, a process has been required to mix aluminum nitrogen oxide with carboxymethylcellulose and to heat the resulting mixture at 1000°C or higher by a sol-gel method, in which the equipment capable of withstanding a high temperature are necessary (Non Patent Literature 1). Patent literature 1 also discloses a method for producing a plate-like iota alumina by oxidizing a molten alkali metal halogenoaluminate with an oxygen gas or an oxygen-containing gas in the temperature range of 400°C to 800°C (Patent Literature 1). However, because an oxygen-containing gas needs to be introduced into the molten product during heating, a reactor capable of carrying out a gas exchange during heating has been required.

### Citation List

### Patent Literature

Patent Literature 1: Japanese Patent Application Laid-open No. H05-201723

### Non Patent Literature

Non Patent Literature 1: Mullite-type Na0.67A1609.33 and a discussion of iota alumina, Journal of the European Ceramic Society 40 (2020), 4276-4280.

### Summary of Invention

### Problem to be solved by the Invention

The present invention provides a method for producing an iota alumina using a low temperature, simple process, and an iota alumina obtained by the method and having a rod-like or needle-like crystal.

### Means to Solve the Problem

A method for producing an iota alumina according to a first aspect includes: a reaction step at which solid raw materials including an alkali metal compound, a fluoride, and at least one or more selected from an aluminum compound and aluminum are mixed and heat-treated; and a washing step at which a product generated at the reaction step is charged into a polar solvent.

In the first aspect, the alkali metal compound may be at least one or more selected from sodium aluminum dioxide (NaAlO₂), sodium borates, sodium hydride (NaH), sodium borohydride (NaBH₄), sodium oxide (Na₂O), potassium aluminum dioxide (KAlO₂), potassium borates, potassium hydride (KH), potassium borohydride (KBH₄), and potassium oxide (K₂0).

In the first aspect, the sodium borates may be at least one or more selected from sodium metaborate (NaBO₂), sodium tetraborate (Na₂B₄₇), and sodium diborate (Na₄B₂O₅).

In the first aspect, the potassium borates may be at least one or more selected from potassium metaborate (KBO₂), potassium tetraborate (K₂B₄O₇), and potassium diborate (K₄B₂O₅) .

In the first aspect, the fluoride may be at least one or more selected from sodium fluoride (NaF), sodium hexafluoroaluminate (Na₃AlF₆), potassium fluoride (KF), potassium aluminum fluoride (KAlF₄), potassium hexafluoroaluminate (K₃AlF₆), aluminum fluoride (AlF₃), and lithium fluoride (LiF).

In the first aspect, the aluminum compound may be at least one or more selected from sodium aluminum dioxide (NaAlO₂), potassium aluminum dioxide (KAlO₂), alumina (Al₂O₃), and aluminum fluoride.

In the first aspect, the polar solvent may be water.

In the first aspect, the polar solvent may be water, and the product and the water may be stirred in the temperature range of 80°C to 100°C both inclusive in the washing step.

The iota alumina according to the first aspect may have a rod-like or needle-like crystal.

In the first aspect, an average aspect ratio of a crystal of the iota alumina may be 3 to 30 both inclusive.

In the first aspect, the iota alumina may have a rod-like or needle-like crystal, and may include sodium.

In the first aspect, the iota alumina may have a rod-like or needle-like crystal, and may include potassium.

### Effects of the Invention

According to a first aspect, a method for producing an iota alumina using a low temperature, simple process can be provided.

### Brief Description of Drawings

FIG. 1A is a cross-sectional SEM (Scanning Electron Microscope) reflection electron image of the aggregated reaction product that is obtained by washing with water for 1 hour in the temperature range of 80°C to 100°C both inclusive with stirring.
FIG. 1B is a magnified SEM reflection electron image in the area IB in FIG. 1A.
FIG. 1C is a magnified SEM reflection electron image of the iota alumina crystal obtained by observing the surface of the product in FIG. 1A.
FIG. 1D is a magnified SEM reflection electron image of the iota alumina crystal, obtained by observing the surface of the product in FIG. 1A at a location different from FIG. 1C.
FIG. 1E is a magnified SEM reflection electron image illustrating the iota alumina crystal whose aspect ratio is measured in the area IE in FIG. 1C.
FIG. 1F is a magnified SEM reflection electron image illustrating the iota alumina crystal whose aspect ratio is measured in the area IF in FIG. 1D.
FIG. 1G is a magnified SEM reflection electron image of the iota alumina crystal of the product obtained using potassium metaborate (KBO₂) as the alkali metal compound.
FIG. 1H is a magnified SEM reflection electron image of the iota alumina crystal of the product obtained using potassium metaborate (KBO₂) as the alkali metal compound.
FIG. 2 is an SEM reflection electron image of the powder-like iota alumina crystals obtained by a high-temperature washing of the reaction products with boiling water.
FIG. 3 is a process diagram of the first production method of the iota alumina.
FIG. 4 is a process diagram of the second production method of the iota alumina.
FIG. 5 is a process diagram of the third production method of the iota alumina.
FIG. 6 is a process diagram of the fourth production method of the iota alumina.
FIG. 7 is a partial cross-sectional view of one example of the sealed vessel used in the first through fourth production methods.
FIG. 8 is a partial cross-sectional view of another example of the sealed vessel used in the first through fourth production methods.
FIG. 9 is a partial cross-sectional view of another example of the sealed vessel used in the first through fourth production methods.
FIG. 10 is a partial cross-sectional view of another example of the sealed vessel used in the first through fourth production methods.
FIG. 11A is a front view photograph of an agitator, having plate (blade)-shaped stirrers and used in the sealed vessel 10B described in FIG. 8.
FIG. 11B is a side view photograph of the agitator, having the plate (blade)-shaped stirrers and used in the sealed vessel 10B described in FIG. 8.
FIG. 12A is a photograph of the plate (blade)-shaped stirrers having the reaction product taken out from the sealed vessel described in FIG. 8 after the completion of stirring for a predetermined time.
FIG. 12B is a photograph of the reaction product that is taken out from the sealed vessel described in FIG. 8 after the completion of stirring for a predetermined time.
FIG. 13A is a photograph before production of the iota alumina by rotating the horizontal wide paddle (WP) agitator of the sealed vessel described in FIG. 10.
FIG. 13B is a photograph after production of the iota alumina by rotating the horizontal wide paddle (WP) agitator of the sealed vessel described in FIG. 10.
FIG. 14A is a schematic diagram of the formation reaction of the iota alumina.
FIG. 14B is a schematic diagram of the formation reaction of the iota alumina.
FIG. 14C is a schematic diagram of the formation reaction of the iota alumina.
FIG. 14D is a schematic diagram of the formation reaction of the iota alumina.
FIG. 14E is a schematic diagram of the formation reaction of the iota alumina.
FIG. 14F is a schematic diagram of the formation reaction of the iota alumina.
FIG. 15 is the X-ray diffraction pattern of the products in Test Example 1.
FIG. 16 is the X-ray diffraction pattern of the product in Test Example 3.
FIG. 17 is the X-ray diffraction pattern of the products in Test Example 4.
FIG. 18 is the X-ray diffraction pattern of the products in Test Example 6.
FIG. 19 is the X-ray diffraction pattern of the products in Test Example 7.
FIG. 20 is the X-ray diffraction pattern of the products in Test Example 8.
FIG. 21 is the X-ray diffraction pattern of the products in Test Example 18.
FIG. 22 is the X-ray diffraction pattern of the products in Test Example 24.

### Description of Embodiments

Hereinafter, the embodiments relating to this disclosure will be described with reference to the drawings, but the disclosure is not limited to the embodiments. The composition elements of the embodiments described below may be combined as appropriate. In addition, there is a case where some composition elements are not used. Also, the composition elements in the embodiments described below include those that may be readily conceived by a person ordinarily skilled in the art, those that are substantially identical, and those that are in a so-called equivalent range.

The production method of the iota alumina (Na_{0.67}Al₆O_{9.33} or K_{0.67}Al₆O_{9.33}) has a reaction step and an extraction step.

The reaction step is the step at which solid raw materials are mixed and heated.

The solid raw materials include an alkali metal compound, a fluoride, and at least one or more selected from an aluminum compound and aluminum.

The alkali metal compound that may be used as raw materials is at least one or more selected from sodium aluminum dioxide (NaAlO₂), sodium borates, sodium hydride (NaH), sodium borohydride (NaBH₄), sodium oxide (Na₂O), potassium aluminum dioxide (KAlO₂), potassium borates, potassium hydride (KH), potassium borohydride (KBH₄), and potassium oxide (K₂O).

Illustrative examples of the sodium borates that may be used as raw materials include specifically borax (sodium tetraborate: Na₂B₄O₇), sodium metaborate (NaBO₂(=Na₂B₂O₄)), sodium diborate (Na₄B₂O₅), potassium metaborate (KBO₂(=K₃(B₃O₆))), sodium tetraborate (K₂B₄O₇) and potassium diborate (K₄B₂O₅), or a combination of at least two or more of these, but not limited to these.

When sodium metaborate is used as the sodium borate, powdered sodium metaborate (sodium metaborate powder) may be used. The particle diameter of the powdered sodium metaborate is preferably 100 µm or less. The powdered sodium metaborate is obtained by pulverizing it to a certain degree of fineness, which is then followed by passing the resulting powder through a sieve having an opening of 100 µm. When the particle diameter of the powdered sodium metaborate is more than 100 µm, the production efficiency of sodium borohydride may decrease. In the powdered sodium metaborate, the particle diameter of less than 100 µm is more preferable. In other words, it is preferable to obtain the powdered sodium metaborate by passing through a sieve having an opening of less than 100 µm (for example, a sieve having an opening of 50 µm or less). In this case, the production efficiency of the iota alumina may be further enhanced.

Because the powdered sodium metaborate contains water, it is preferable to increase the amount of the sodium metaborate powder by the mass of the water, with respect to the amount thereof required for the synthesis of sodium borohydride.

Illustrative examples of the potassium borate that may be used as raw materials include, but not limited to, potassium metaborate (KBO₂), potassium tetraborate (K₂B₄O₇), potassium diborate (K₄B₂O₅), or a combination of at least two or more of them.

The aluminum that may be used as raw materials may be a powdered material, a scrap material, and other fragments, among others. The aluminum fragment may be made from scrap materials such as swarf and waste material. It is preferable that the aluminum fragment contains an impurity of a noble metal, that is nobler than aluminum, as little as possible.

It is preferable that the amount of aluminum is 110% or more in molar ratio to the amount required for the synthesis of sodium borohydride. Some of the excess aluminum is consumed by the reaction with water, but it also contributes to increasing the opportunity for its contact with sodium metaborate when the amount of aluminum as a raw material decreases as the reaction proceeds, thereby enhancing the yield. The excessively charged aluminum can be recovered as the metal aluminum for reuse at the washing step of the sodium borohydride.

The average particle diameter of the powdered aluminum is, for example, 1 µm or more, preferably with the maximum particle diameter of 10 mm or less. When the average particle diameter of the powdered aluminum is less than 1 µm, it is susceptible to a dust explosion and thus difficult to be handled, and also the particles may readily adhere to each other thereby forming an aggregate thereof. When the average particle diameter thereof is more than 10 mm, the specific surface area per mass decreases, resulting in the reduction of the reaction area, which may cause a drastic decrease in the initial reaction rate. The average particle diameter of the powdered aluminum is more preferably in the range of 5 µm to 5 mm both inclusive. The average particle diameter is obtained as a sphere-equivalent particle diameter using a laser diffraction particle size distribution analyzer.

At least one or more selected from sodium aluminum dioxide (NaAlO₂), potassium aluminum dioxide (KAlO₂), alumina (Al₂O₃), and aluminum fluoride (AlF₃) may be used as the aluminum compound that may be used as raw materials.

The fluoride that may be used as raw materials is at least one or more selected from sodium fluoride (NaF), sodium hexafluoroaluminate (Na₃AlF₆), potassium fluoride (KF), potassium aluminum fluoride (KAlF₄), potassium hexafluoroaluminate (K₃AlF₆), aluminum fluoride (AlF₃), and lithium fluoride (LiF). Among these, sodium fluoride, which is an alkali metal fluoride, is especially preferable.

The addition of the fluoride contributes to a smooth crystallization of the iota alumina. Specifically, the fluoride promotes the decomposition reaction of the sodium aluminum dioxide (NaAlO₂) that is an intermediate product, which increases the yield of the product of the decomposition reaction, i.e., the iota alumina, resulting in facilitating the crystallization of the iota alumina.

In the following explanation, the molar ratio of the sum of all the alkali metals and alkaline earth metals in the raw material to boron (B) in the sodium borates is sometimes described by A/B (molar ratio). In this embodiment, the A/B (molar ratio) in the raw materials is preferably less than 2.65. When the A/B is 2.65 or more, the amount of the sodium ion in the reaction system becomes too much so that this results in the decrease of the yield.

At the reaction step, the heat treatment to the solid raw materials yields the products including the iota alumina.

The heating temperature at the reaction step is higher than 450°C. When the heating temperature is 450°C or lower, crystallization of the iota alumina does not proceed sufficiently well. The heating temperature at the reaction step is lower than 710°C. When the heating temperature is 710°C or higher, an impurity, i.e., sodium aluminum dioxide (NaAlO₂), is produced, resulting in the decrease of the yield. In addition, when the heating temperature is 710°C or higher, sodium borohydride (NaBH₄) decomposes thereby resulting in the decrease of the amount of molten sodium borohydride, which leads to the decrease in the reaction amount.

The heating temperature at the reaction step is preferably in the range of 490°C to 610°C both inclusive. When the heating temperature is in the range of 490°C to 610°C both inclusive, a sufficient reaction rate may be obtained, resulting in an excellent production efficiency of the iota alumina. More specifically, when the heating temperature is 490°C or higher, a long and thin crystal, a so-called needle-like iota alumina, is generated, and the product, i.e., sodium borohydride (NaBH₄), is transformed to a molten state to accelerate the reaction.

Even when the heating temperature is lower than 490°C, the oxide film of aluminum (Al) becomes the iota alumina. However, the molten amount of sodium borohydride is significantly low so that the production rate of the iota alumina is very slow, resulting in generation of a thick and short crystal, a so-called rod-like iota alumina.

The reaction step is carried out in a hydrogencontaining gas atmosphere. When a hydrogen atmosphere is used, the hydrogen gas pressure is preferably in the range of 0.5 MPa to 10 MPa both inclusive, and more preferably in the range of 0.6 MPa to 1 MPa both inclusive. By setting the hydrogen gas pressure in the range of 0.6 MPa to 1 MPa both inclusive, not only the production efficiency of sodium borohydride is excellent, but also the reaction vessel, apparatus, and so forth that are excellent in the pressure resistance are not necessary, so that the increase in a facility cost may be suppressed.

At the reaction step, the heat treatment to the solid raw materials causes the formation reaction to form the iota alumina. The following is a detailed description of the formation reaction of the iota alumina.

In the initial stage of the reaction, sodium metaborate (NaBO₂) comes into contact with the aluminum (Al) particle by agitation, so that sodium metaborate adheres to the aluminum (Al) particle. With this adhesion, the aluminum oxide film on the aluminum (Al) surface absorbs sodium oxide (Na₂O), resulting in sodium aluminum dioxide (NaAlO₂).

The resulting sodium aluminum dioxide (NaAlO₂) is catalyzed by a fluoride ion to become the iota alumina. Thus, in the initial stage of the reaction, an oxide film layer that has been transformed to the iota alumina having the thickness of about 100 nm to about 2000 nm is formed on the aluminum particle surface. This allows the sodium ion to easily pass through the oxide film on the aluminum (Al) surface.

Sodium oxide (Na₂O) is formed simultaneously with the transformation of sodium aluminum dioxide (NaAlO₂) to the iota alumina. This causes aluminum (Al) to be oxidized by sodium oxide (Na₂O) to aluminum oxide (Al₂O₃) inside the oxide film layer.

The aluminum oxide (Al₂O₃) formed on the aluminum surface is fine and very active and acts as a Lewis acid, while the surrounding sodium oxide (Na₂O) acts as a Lewis base, neutralizing the aluminum oxide (Al₂O₃) to form sodium aluminum dioxide (NaAlO₂). Sodium aluminum dioxide (NaAlO₂) crystallizes into the iota alumina (Na_{0.67}Al₆O_{9.33}) by the catalytic action of the fluoride ion when the fluoride ion exists, resulting in the release of sodium oxide (Na₂O). With this, the iota alumina is formed inside the initial aluminum oxide film, and this grows into the iota alumina layer including sodium oxide (Na₂O).

The iota alumina is also formed in the presence of four ions, i.e., aluminum, oxygen, sodium, and fluoride ions; they are all dissolved in sodium borohydride. When sodium borohydride is in a liquid state, diffusion of the four aforementioned ions is promoted and the growth of the iota alumina is facilitated, so that the iota alumina having a large aspect ratio may be readily formed.

The crystallization to the iota alumina crystal often results in a needle-like or a rod-like crystal. The formation of the iota alumina as the needle-like crystal is presumably due to the reaction in which the crystal growth takes place with releasing sodium oxide (Na₂O) during the crystallization process. In other words, because the direction of the crystal growth is preferentially in the direction of a lower sodium oxide (Na₂O) concentration, it is presumed that the iota alumina extends in one direction thereby tending to form a needle-like or a rod-like iota alumina crystal.

Here, in the reaction to form the iota alumina, when the heating temperature at the reaction step is made to 490°C or higher, a particle diffusion reaction takes place. Hereinafter, the particle diffusion reaction will be described.

In the aforementioned oxidation reaction of aluminum inside the oxide film layer, sodium oxide (Na₂O) is reduced to sodium (Na). The resulting sodium (Na) reduces hydrogen (H₂) to form sodium hydride (NaH). The resulting sodium hydride (NaH) reacts with sodium metaborate (NaBO₂) to form sodium borohydride (NaBH₄) and sodium oxide (Na₂O).

On the surface of the aluminum particle, the fluoride ion reacts with aluminum to form a NaAlF layer that contains sodium (Na), aluminum (Al), and fluorine (F) as the constituent elements thereof. The NaAlF layer mainly consists of sodium hexafluoroaluminate (Na₃AlF₆), which forms lower aluminum fluoride (presumably AlF_{1.5}) at the interface with aluminum. The resulting lower aluminum fluoride (AlF_{1.5}) is very reductive, reducing sodium oxide (Na₂O) to form sodium hydride (NaH), aluminum oxide (Al₂O₃), and sodium fluoride (NaF) in a hydrogen atmosphere. The lower aluminum fluoride (AlF_{1.5}), a part of which migrates into the system because it has a pressure as a gas, together with sodium hydride, which is also a gas, promotes the reduction reaction to form sodium borohydride (NaBH₄) in the sodium metaborate (NaBO₂) particle. As a result, the fluoride also contributes to the movement of aluminum into the system.

Sodium borohydride (NaBH₄) becomes a molten body when heated to 490°C or higher. The molten sodium borohydride (NaBH₄) fills the iota alumina layer, thereby dissolving sodium hydride, sodium oxide, a sodium ion, an aluminum ion, a fluoride ion, an oxygen ion, and a metaborate ion (BO²⁻).

This allows the molten sodium borohydride (NaBH₄) to serve as a mass transfer medium and as a reaction field, allowing ions to move in and out of the oxide layer outside the aluminum particle. This creates the condition that allows the reaction to take place inside and outside the iota alumina layer of the aluminum (Al) particle, or on the surface of the sodium metaborate (NaBO₂) particle.

The aluminum (Al) and sodium metaborate (NaBO₂) particles come into contact with each other by agitation, and thereby materials including raw materials, product intermediates, and products repeat adhesion and separation on the particle surface. As a result, the particles of sodium borohydride (NaBH₄), sodium hydride (NaH), sodium oxide (Na₂O), sodium metaborate (NaBO₂), and aluminum ion move at a high moving speed which cannot be achieved in a movement due to simple diffusion, thereby promoting the formation reaction of sodium borohydride (NaBH₄).

As described above, in the formation reaction of the iota alumina, not only inside the aluminum (Al) particle, but also by the contact between particles, the raw material sodium metaborate (NaBO₂), the intermediate products (NaH, Na₂O, and AlF_{1.5}), and sodium borohydride (NaBH₄) as a solvent, move in mass transfer, in which some of the intermediate products (NaH and AlF_{1.5}) move as gases, so that the reaction takes place on the surface and inside of each particle at a fast rate. In this embodiment, this reaction is referred to as a "particle agitation reaction".

Note that when the heating temperature at the reaction step is lower than 490°C, sodium borohydride (NaBH₄) cannot become a molten body, so that the passage through the iota alumina layer is so slow that the exuding amount together with sodium hydride (NaH) from the aluminum (Al) particle significantly decreases. Thus, in this case, mainly the boron ion that has passed through the iota alumina layer is in the state of reacting with sodium hydride (NaH) inside the oxide layer of the aluminum (Al) particle, and sodium hydride (NaH), some of which has become a gas, reacts with the sodium metaborate (NaBO₂) particle.

The washing step is the step at which a mixture of solid raw materials is charged into a polar solvent. At this step, the concentration of the iota alumina (Na_{0.67}Al₆O_{9.33}) may be increased from the reaction products. With this, the iota alumina containing few impurities can be obtained.

At the washing step, the mixture of the solid raw materials is stirred with the polar solvent. With this, the elution speed of the substances other than the iota alumina (Na_{0.67}Al₆O_{9.33}) can be increased.

The polar solvent is, for example, water, preferably pure water such as ion-exchanged water. With this, sodium borohydride (NaBH₄), which is a water-soluble impurity, can be properly removed from the reaction products. When the polar solvent is water, substances that are soluble in water, such as sodium borohydride (NaBH₄), sodium hydride (NaH), sodium fluoride (NaF), lower aluminum fluoride (AlF_{1.5}), sodium borates, and sodium aluminum dioxide (NaAlO₂) can be removed from the reaction products.

Here, water used as the polar solvent is not limited to pure water; an acidic or an alkaline aqueous solution may also be used. In this case, it is preferable that pH of the water used as the polar solvent is preferably in the range of 2 to 11 both inclusive. The pH of water used as the polar solvent is more preferably 9 or more. With this, impurities that are not soluble in neutral water, such as cryolite (Na₃AlF₆) and aluminum, may be further eluted so as to be removed from the reaction products.

When the polar solvent is water, it is preferable to conduct the washing step in the temperature range of 80°C to 100°C both inclusive. With this, the elution speed of the impurities can be increased. The washing step may also be carried out at normal temperature (or room temperature). In this case, an aggregated iota alumina is obtained in which needle-like or rod-like iota alumina crystals make up the majority of the crystals. In the following description about the washing step, unless otherwise specifically explained, the high temperature means a temperature range of 80°C to 100°C both inclusive, and the normal temperature (or room temperature) means a temperature range of 5°C to 35°C both inclusive.

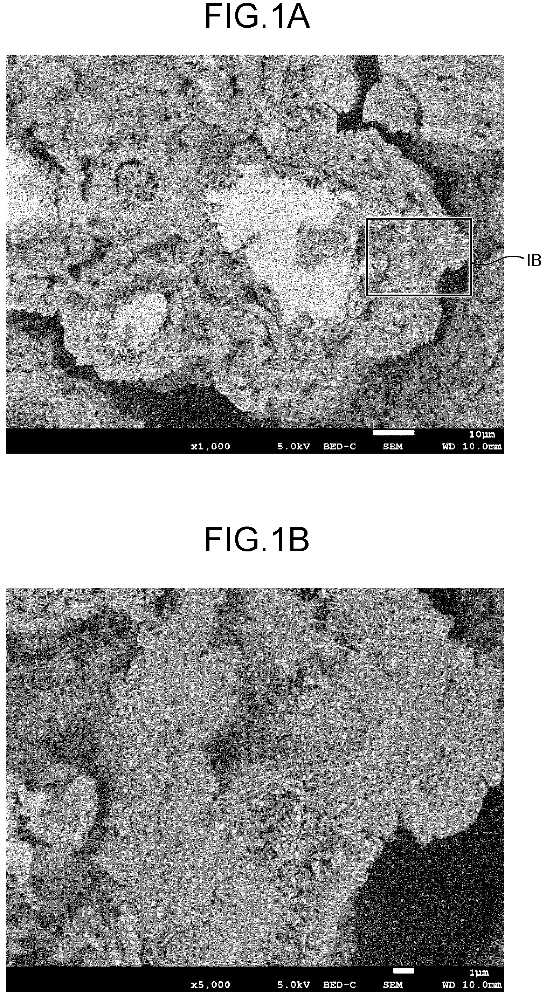

FIG. 1A is a cross-sectional SEM (Scanning Electron Microscope) reflection electron image of the aggregated reaction product that is obtained by washing with water for 1 hour at 80°C to 100°C both inclusive with stirring. FIG. 1B is a magnified SEM reflection electron image in the area IB in FIG. 1A. Here, the reaction product in FIG. 1A is the product in Test Example 7 to be described later. The aggregated product is the result of the adhesion of particles, which were originally aluminum particles, to each other because the generated sodium borohydride (NaBH₄) became the molten body. The particles have a dense oxide layer on the surface thereof, and the inner oxide is the iota alumina having a needle-like (whisker-like) shape, as can be seen in FIG. 1B. The space between the layered iota alumina layers is formed by eluting out of sodium borohydride by washing. Unreacted aluminum remains in the center.

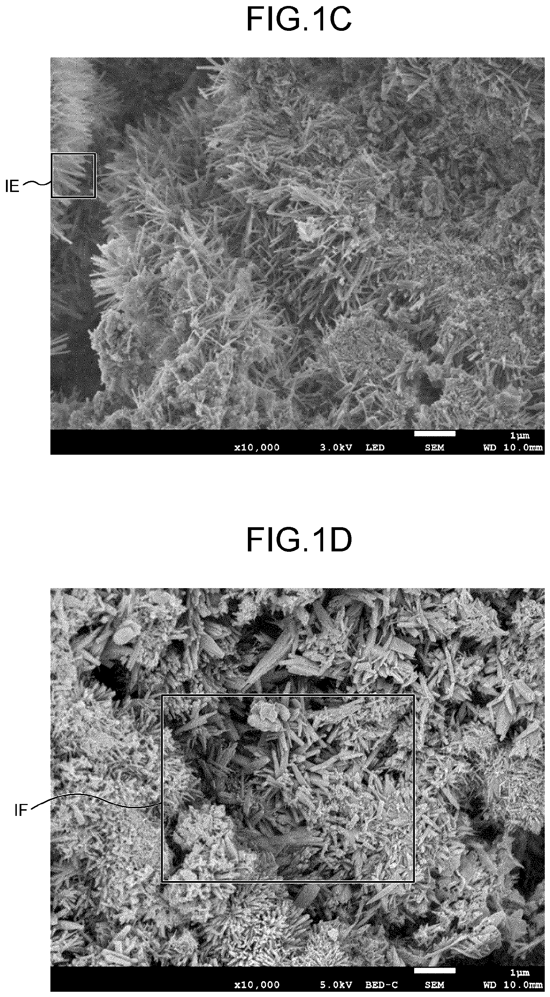

FIG. 1C is a magnified SEM reflection electron image of the iota alumina crystal, obtained by observing the surface of the product in FIG. 1A. FIG. 1D is a magnified SEM reflection electron image of the iota alumina crystal, obtained by observing the surface of the product in FIG. 1A at a location different from FIG. 1C. When the growing speed of the iota alumina is fast, the shape will be long and thin as can be seen in FIG. 1C, and when it is slow, the width will be thick as can be seen in FIG. 1D. The needle-like iota alumina crystal obtained in this way had a width of 0.05 µm to 0.5 µm both inclusive, a length of 0.5 µm to 4 µm both inclusive, and an aspect ratio of 3.4 to 24.5 both inclusive.

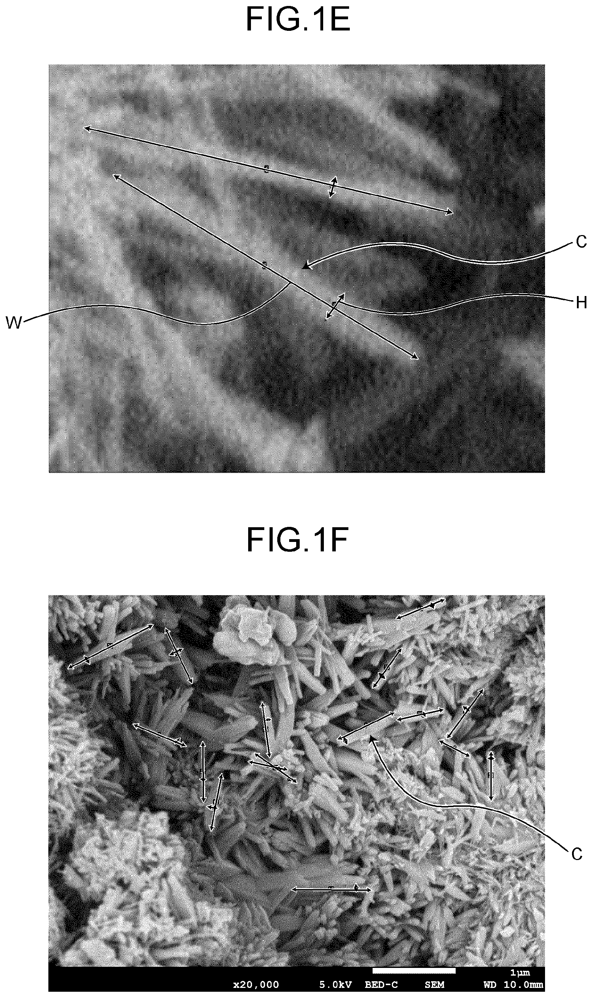

Here, the aspect ratio refers to the ratio of the length W to the width H, i.e., the length W divided by the width H. FIG. 1E is a magnified SEM reflection electron image illustrating the iota alumina crystal in the area IE in FIG. 1C. As can be seen in FIG. 1E, in the SEM reflection electron image, the size W in the direction to which the iota alumina crystal C extends is measured as the length, and the size H in the direction perpendicular to this electron image is measured as the width. In this way, the aspect ratio of one iota alumina crystal C can be calculated.

The average aspect ratio of the iota alumina crystals is in the range of 3 to 30 both inclusive. The average aspect ratio of the iota alumina crystals refers to the arithmetic mean of the aspect ratios of multiple iota alumina crystals. FIG. 1F is a magnified SEM reflection electron image illustrating the iota alumina crystal whose aspect ratio is measured in the area IF in FIG. 1D. As can be seen in FIG. 1F, in the calculation of the average aspect ratio, several linear structures that clearly appear in the crystal shape in the SEM reflection electron image of a given area are extracted as the iota alumina crystal C. In other words, crystal shapes that appear in the SEM reflection electron image in a given area but are not clearly visible as the linear structure are not extracted as the iota alumina crystal C. Here, as illustrated in FIG. 1F, the image area in the SEM reflection electron image used to calculate the average aspect ratio is the area in which at least 10 iota alumina crystals C are extracted.

Upon calculating the average aspect ratio for multiple image areas, when the average aspect ratio calculated for at least one image area is in the range of 3 to 30 both inclusive, the average aspect ratio of the iota alumina crystal can be said that this is in the range of 3 to 30 both inclusive.

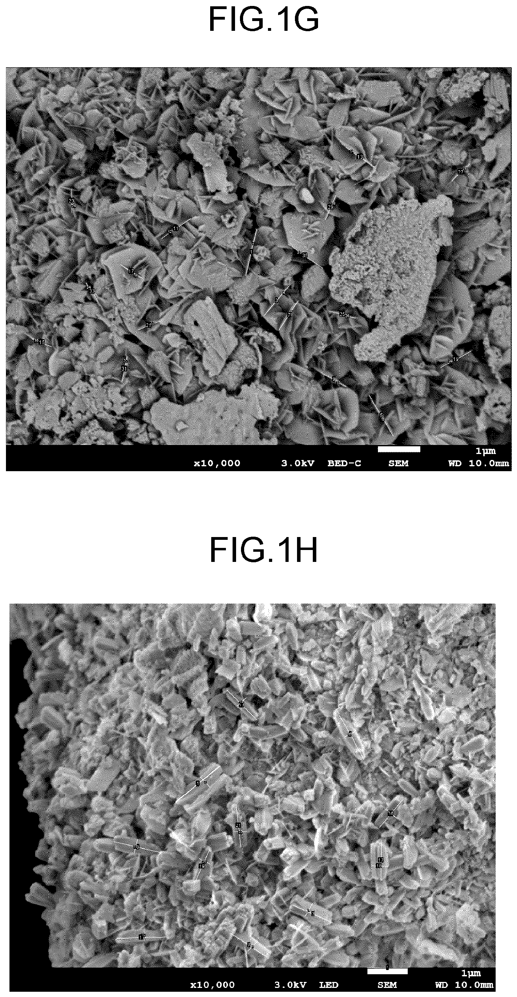

FIGS. 1G and 1H are magnified SEM reflection electron images of the iota alumina crystals pertaining to the product using potassium metaborate (KBO₂) as the alkali metal compound. Here, the reaction products in FIGS. 1G and 1H are the products of Test Example 25 to be described later. FIG. 1H is a magnified SEM reflection electron image obtained by observing at an area different from FIG. 1G. When potassium borates are used as the raw material, a plate-like iota alumina as can be seen in FIG. 1G and a rod-like iota alumina as can be seen in FIG. 1H are obtained.

The resulting plate-like iota alumina crystal has the thickness of 0.018 µm to 0.047 µm both inclusive, the width of 0.499 µm to 1.111 µm both inclusive, and the aspect ratio of 12.8 to 60.5 both inclusive. The width of the plate-like iota alumina refers to the thickness of the iota alumina crystal, and the width of the plate-like iota alumina refers to the length of the iota alumina crystal in the direction perpendicular to its thickness. The average aspect ratio in the image area of FIG. 1G is calculated to be 25.4.

The rod-like iota alumina crystal obtained in this way had the width of 0.298 µm to 0.400 µm both inclusive, the length of 0.879 µm to 1.444 µm both inclusive, and the aspect ratio of 2.4 to 4.0 both inclusive. The average aspect ratio in the image range of FIG. 1F is calculated to be 3.34.

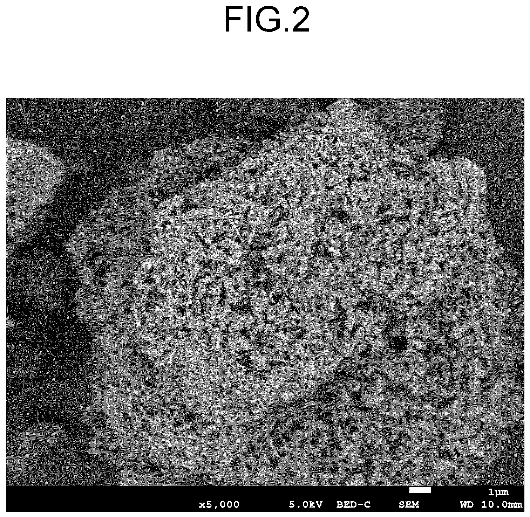

FIG. 2 is an SEM reflection electron image of powder-like iota alumina crystals obtained by a high-temperature washing of the reaction products with boiling water. At the washing step, water as the polar solvent may be boiling. In other words, the reaction products may be washed by water that is boiling. In this case, as can be seen in FIG. 2, the powder-like iota alumina having a particle diameter of about 1 µm to about 100 µm is obtained, having needle-like or rod-like iota alumina crystals on its surface.

The polar solvent is not limited to water, but diglyme (diethylene glycol dimethyl ether) may also be used. Even in this case, the impurity sodium borohydride (NaBH₄) can be suitably removed from the reaction products.

Hereinafter, the first through fourth production methods, which are specific examples of the production method of the iota alumina according to this embodiment, will be described in detail. Unless otherwise specifically noted, the following steps are described using sodium fluoride as the fluoride and sodium metaborate (NaBO₂) that is separated from the sodium borates as the crystal. Note that the first through fourth production methods described below are mere examples, and the method is not limited to them.

### [First Production Method]

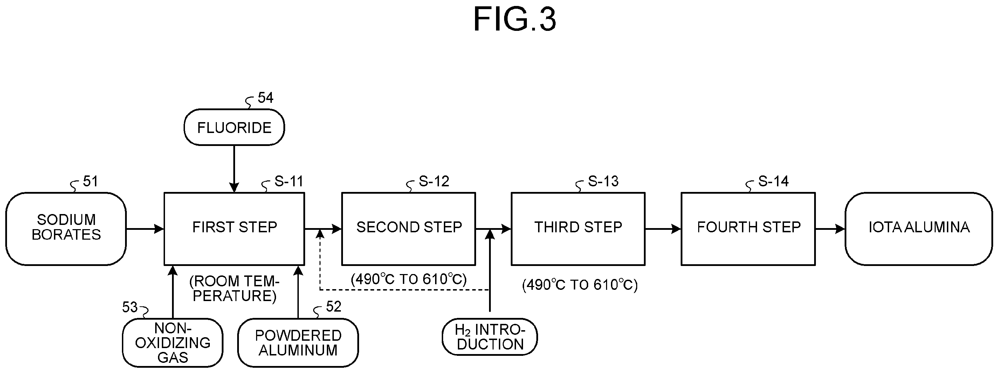

FIG. 3 is a process diagram of the first production method of the iota alumina. The first production method of sodium borohydride involves mixing powdered aluminum and powdered fluoride. Next, after the resulting mixture is preliminarily heated at the temperature of 100°C to 330°C both inclusive and mixed with sodium borate, this mixture is charged into a sealed vessel. Then, the reaction is carried out at the temperature of 490°C to 610°C both inclusive in the sealed vessel that is filled with a hydrogen gas. After this, the reaction products are washed. Here, both the sodium borates and the powdered aluminum react as the both are in the solid state. The first production method of sodium borohydride includes the steps from the first step (S-11) to the fourth step (S-14), as illustrated in FIG. 3. Here, the first (S-11) to third (S-13) steps are one example of "reaction step" and the fourth step (S-14) is one example of "washing step".

### (a) First Step

As the pretreatment step, the powdered aluminum and sodium fluoride are mixed and rubbed together. After this treatment, the mixture thereby obtained is charged into a vessel, which is then covered with a lid to create an atmosphere of the humidity of 10% or less; then, this is placed in a furnace and heated at the temperature of 100°C to 330°C both inclusive for at least 30 minutes so that the aluminum (Al) and sodium fluoride (NaF) are caused to release moisture included therein and to form an aluminum oxide film on the particle surface of the powdered aluminum (Al) 52.

The resulting heat-treated powder is cooled and then mixed with the powdered sodium borates. After or before charging the powder mixture into the sealed vessel, a non-oxidizing gas is introduced into the sealed vessel, and thereby the inside thereof is filled with the non-oxidizing gas. These steps are the first step (S-11).

In other words, at the first step, aluminum and sodium fluoride are preliminarily mixed (pre-mixed), and after the heat treatment, all the raw materials are mixed and charged into the sealed vessel. At this first step, the treatment in an atmosphere of the humidity of 10% or less prevents the adhesion of moisture from the air to the aluminum and fluoride, as well as the oxidation of the aluminum from occurring. After the treated powder and powdered sodium borate are mixed and charged into the sealed vessel, the timing for filling the sealed vessel with the non-oxidizing gas may be after or before the raw materials are charged into the sealed vessel.

At the first step, when the raw materials are charged, there is no particular restriction in the temperature inside the sealed vessel. The temperature of lower than 100°C is advantageous in view of workability.

As for the sealed vessel at the first step, the vessel that has a heat resistance and a pressure resistance that can withstand a high temperature (e.g., 610°C) and a high pressure (e.g., 10 MPa), respectively, and that can ensure a sealed space to be filled with a gas may be used. The sealed vessel is equipped with an agitation means. Details of the sealed vessel will be described later.

### (b) Second Step

At the second step (S-12) described in FIG. 3, after all the raw materials are mixed and charged into the sealed vessel, the inside of the vessel is heated to the temperature of 400°C to 610°C both inclusive so as to remove the remaining water included in the sodium borate and powdered aluminum; and the moisture that is not degassed is reacted with aluminum so as to be converted to a hydrogen gas and an aluminum oxide film to remove the moisture. Aluminum fluoride (AlF₃) formed at the first step becomes cryolite (Na₃AlF₆) by the high-temperature heating, resulting in an NaAlF layer. The second step is to react the vaporized moisture (i.e., residual moisture in the materials in the sealed vessel) with aluminum, or to degas by means of a vacuum pump to remove the moisture from inside the reaction system thereby converting the aluminum fluoride formed on the aluminum surface to the cryolite.

At the second step, when the heating temperature is 530°C, the formation of cryolite (Na₃AlF₆) from aluminum fluoride (AlF₃) takes with the time of at least about 30 minutes. Here, when a dry sodium metaborate with the moisture content of about 0% to about 3% is used as the raw material, the dehydration reaction completes in about 0.5 to about 1 hour.

### (c) Third Step

At the third step (S-13) described in FIG. 3, the inside of the sealed vessel is heated to the temperature of 490°C to 610°C both inclusive with introducing a hydrogen gas into the sealed vessel. Upon heating, the oxide film and sodium aluminum dioxide (NaAlO₂) on the aluminum surface are transformed to the needle-like iota alumina by the diffusion of sodium oxide and the crystallization of aluminum oxide by the fluoride; when sodium oxide reaches the aluminum (Al) surface, the formation of sodium hydride (NaH) by the reducing action of aluminum starts. The sodium borohydride reaction starts when the sodium hydride (NaH) diffuses through the iota alumina and becomes in contact with sodium borate. When sodium borohydride fills the iota alumina layer, sodium hydride (NaH), sodium oxide (Na₂O), an aluminum ion, a borate ion, and so forth can move using the sodium borohydride as the solvent, and the "particle agitation reaction" starts. A weak agitation is sufficient for the particle agitation reaction because mass transfer is possible only by contact of the particles. The agitating means in the sealed vessel is rotated for agitation. In this way, the reaction products are obtained.

At the third step, the particle agitation reaction is conducted such that the powders are brought into contact with each other in the solid state and are caused to react on the aluminum surface, in which the products and raw materials are transferred by diffusion to continue the reaction for synthesis, and in order to further facilitate these mass transfers, a kinetic energy may also be provided by agitation.

At the third step, as the reaction proceeds, the amount of hydrogen in the reaction vessel decreases, but the reaction rate is increased by increasing the hydrogen gas pressure. The reaction here is expressed by the following reaction equation (2).

4Al + 6H₂ + 3NaBO₂ → 3NaBH₄ + 2Al₂O₃ (2)

At the third step, the sealed vessel used at the first and second steps may be used as it is, or a sealed vessel different from them may be used. In other words, the first step, the second step and the third step 3 may be conducted as a step using one sealed vessel or using different sealed vessels.

### (d) Fourth Step

The fourth step (S-14) illustrated in FIG. 3 is to wash the reaction products with a polar solvent. Here, the polar solvent is water. At the fourth step, the reaction products are stirred with water at the temperature of 50°C to 100°C both inclusive for at least 30 minutes. With this, sodium borohydride (NaBH₄), sodium hydride (NaH), sodium fluoride (NaF), lower aluminum fluoride (AlF_{1.5}), sodium borates, and sodium aluminum dioxide (NaAlO₂) are eluted out from the reaction products into the polar solvent. The reaction product is then taken out from the solvent and dried under a reduced pressure. In the case where an alkaline aqueous solution is used as the polar solvent at the fourth step, in addition to the above substances, cryolite (Na₃AlF₆) and aluminum may be further dissolved. In this case, the iota alumina and aluminum hydroxide remain as solids, allowing the iota alumina to be more easily taken out.

The iota alumina may be produced by from the first step to the fourth step described above.

Hereinafter, other production methods will be described. The same items as in the first production method are omitted.

### [Second Production Method]

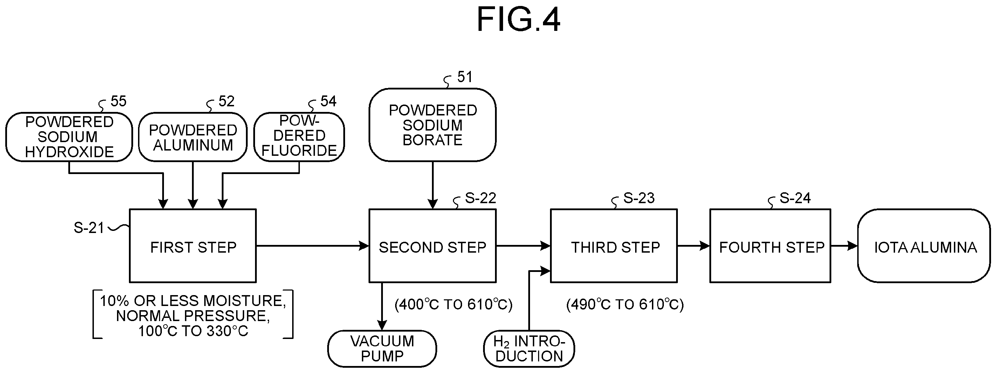

FIG. 4 is a process diagram of the second production method of the iota alumina. In the second production method of sodium borohydride, powdered aluminum 52, powdered sodium hydroxide 55, and powdered fluoride 54 are mixed and pre-heated at the temperature of 100°C to 330°C both inclusive followed by further mixing with powdered sodium borate 51. The resulting mixture is charged into the sealed vessel, and then heated at the temperature of 400°C to 610°C both inclusive to remove water by using a vacuum pump. After this, the reaction is carried out at the temperature of 490°C to 610°C both inclusive in the sealed vessel filled with a hydrogen gas that is introduced at this time. The powdered sodium borate 51 and the powdered aluminum 52 react as the both are in the solid state. The second production method of the sodium borohydride includes the steps from the first step (S-21) to the fourth step (S-24), as illustrated in FIG. 4. Here, the first (S-21) to third (S-23) steps are one example of the "reaction step" and the fourth step (S-24) is one example of the "washing step".

### (a) First Step

As the pretreatment step, the powdered aluminum 52, the powdered fluoride 54, and the powdered sodium hydroxide 55 are mixed and rubbed together. After this treatment, the mixture thereby obtained is charged into a vessel and covered with a lid to create an atmosphere of the humidity of 10% or less; then, this is placed in a furnace and heated at the temperature of 100°C to 330°C both inclusive for at least 30 minutes so that aluminum (Al), sodium fluoride (NaF), and sodium hydroxide are caused to release a part of moisture included therein and to form an aluminum oxide film and sodium oxide (Na₂O) on the particle surface of the powdered aluminum (Al) 52. In this case, oxidation of aluminum is prioritized because of the high moisture content from sodium hydroxide and the presence of sodium oxide on the aluminum surface. Therefore, the reaction that produces aluminum fluoride from hydrogen fluoride takes place only slightly.

The resulting heat-treated powder is cooled and then mixed with the powdered sodium borates. After or before charging the powder mixture into the sealed vessel, a non-oxidizing gas is introduced into the sealed vessel, and thereby the inside thereof is filled with the non-oxidizing gas. These steps are the first step (S-21).

In other words, at the first step, aluminum and sodium hydroxide are preliminarily mixed (pre-mixed), and after the heat treatment, all the raw materials are mixed and charged into the sealed vessel. At this first step, treatment in an atmosphere of the humidity of 10% or less prevents the adhesion of moisture from the air to the aluminum, sodium hydroxide, and fluoride, as well as the oxidation of the aluminum from occurring. After the treated powder and powdered sodium borate are mixed, the timing for filling the sealed vessel with the non-oxidizing gas may be after or before the raw materials are charged into the sealed vessel.

### (b) Second Step

At the second step (S-22) described in FIG. 4, after all the mixed raw materials are charged into the sealed vessel, the inside of the vessel is heated to the temperature of 400°C to 610°C both inclusive so as to remove the remaining water included in the sodium hydroxide, sodium borate, powdered aluminum, and powdered fluoride; and the moisture that has not been degassed is reacted with aluminum so as to be converted to a hydrogen gas and the aluminum oxide film to remove the moisture. At this time, the sodium hydroxide that adheres to the aluminum surface is transformed to sodium oxide. Some sodium oxide also reacts with the oxide film on the aluminum surface to form sodium aluminum dioxide (NaAlO₂). The second step is to react the residual moisture included in the raw materials in the sealed vessel with aluminum, or to degas by means of a vacuum pump to remove the moisture from inside the reaction system.

### (c) Third Step

At the third step (S-23) described in FIG. 4, the inside of the sealed vessel is heated to the temperature of 490°C to 610°C both inclusive with introducing a hydrogen gas into the sealed vessel. Upon heating, the oxide film and sodium aluminum dioxide (NaAlO₂) on the aluminum surface are transformed to the needle-like iota alumina by the diffusion of sodium oxide and the crystallization of aluminum oxide by the fluoride; when sodium oxide reaches the aluminum (Al) surface, the formation of sodium hydride (NaH) by the reducing action of aluminum starts. The sodium borohydride reaction starts when sodium hydride (NaH) diffuses through the iota alumina and comes in contact with sodium borate. When sodium borohydride fills the iota alumina layer, sodium hydride (NaH), sodium oxide (Na₂O), an aluminum ion, a borate ion, and so forth can move using the sodium borohydride as the solvent, and the "particle agitation reaction" starts. A weak agitation is sufficient for the particle agitation reaction because mass transfer is possible only by contact of the particles. The agitating means in the sealed vessel is rotated for agitation. In this way, the reaction products are obtained.

### (d) Fourth Step

The fourth step (S-24) illustrated in FIG. 4 is to wash the reaction products with a polar solvent. Here, the polar solvent is water. At the fourth step, the reaction products are stirred with water at the temperature of 80°C to 100°C both inclusive for at least 30 minutes. With this, sodium borohydride (NaBH₄), sodium hydride (NaH), sodium fluoride (NaF), lower aluminum fluoride (AlF_{1.5}), sodium borates, and sodium aluminum dioxide (NaAlO₂) are eluted out from the reaction products into the polar solvent. The reaction product is then taken out from the solvent and dried under a reduced pressure.

### [Third Production Method]

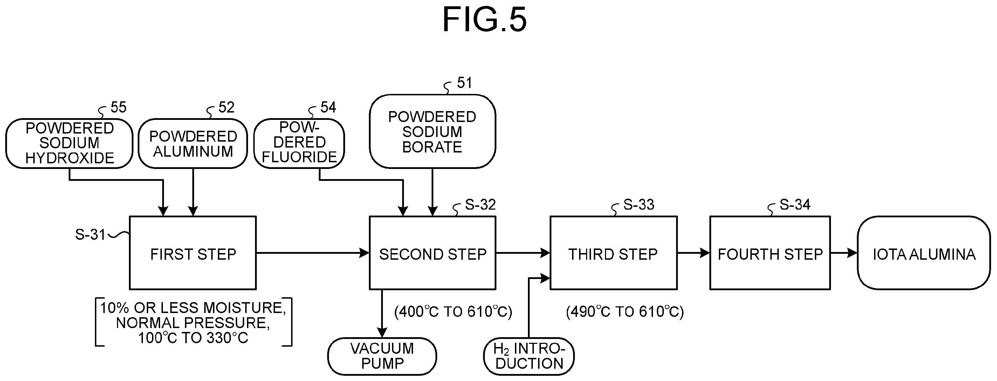

FIG. 5 is a process diagram of the third production method of the iota alumina. In the third production method of sodium borohydride, the powdered aluminum 52 and the powdered sodium hydroxide 55 are mixed and pre-heated at the temperature of 100°C to 330°C both inclusive followed by further mixing with the powdered fluoride 54 and the powdered sodium borate 51. The resulting mixture is charged into the sealed vessel, and then heated at the temperature of 400°C to 610°C both inclusive to remove water by using a vacuum pump. After this, the reaction is carried out at the temperature of 490°C to 610°C both inclusive in the sealed vessel filled by a hydrogen gas that is introduced thereto. The powdered sodium borate 51 and the powdered aluminum 52 react as the both are in the solid state. The third production method of sodium borohydride includes the steps from the first step (S-31) through the fourth step (S-34), as illustrated in FIG. 5. Here, the first (S-31) to third (S-33) steps are one example of "reaction step" and the fourth step (S-34) is one example of the "washing step".

### (a) First Step

As the pretreatment step, the powdered aluminum 52 and the powdered sodium hydroxide 55 are mixed and rubbed together. After this treatment, the mixture thereby obtained is charged into a vessel, and then the vessel is covered with a lid to create an atmosphere of the humidity of 10% or less; then, this is placed in a furnace and heated at the temperature of 100°C to 330°C both inclusive for at least 30 minutes so that the sodium hydroxide is caused to release a part of moisture contained therein to aluminum (Al), and thereby forming an aluminum oxide film and sodium oxide (Na₂O) on the particle surface of the powdered aluminum (Al) 52.

The above heat-treated powder is cooled and then mixed with the powdered sodium borates and the powdered fluoride. After or before charging the powder mixture into the sealed vessel, a non-oxidizing gas is introduced into the sealed vessel, and thereby the inside thereof is filled with the non-oxidizing gas. The above process is the first step (S-31).

In other words, at the first step, aluminum and sodium hydroxide are preliminarily mixed (pre-mixed), and after the heat treatment, all the raw materials are mixed and charged into the sealed vessel. At this first step, treatment in an atmosphere of the humidity of 10% or less prevents the adhesion of moisture from the air to the aluminum, sodium hydroxide, and fluoride, as well as the oxidation of the aluminum from occurring. After the treated powder and powdered sodium borate are mixed, the timing for filling the sealed vessel with the non-oxidizing gas may be after or before the raw materials are charged into the sealed vessel.

### (b) Second Step

At the second step (S-32) described in FIG. 5, after all the mixed raw materials are charged into the sealed vessel, the inside of the vessel is heated to the temperature of 400°C to 610°C both inclusive so as to remove the remaining water included in the sodium hydroxide, the sodium borate, the powdered aluminum, and the powdered fluoride; and the moisture that is not degassed is reacted with aluminum so as to be converted to a hydrogen gas and an aluminum oxide film to remove the moisture. The sodium hydroxide that adheres to the aluminum surface is transformed to sodium oxide. Some sodium oxide reacts with the oxide film on the aluminum surface to form sodium aluminum dioxide (NaAlO₂). The second step is to react the residual moisture included in the raw materials in the sealed vessel with aluminum, or to degas by means of a vacuum pump to remove the moisture from inside the reaction system.

### (c) Third Step

At the third step (S-33) described in FIG. 5, the inside of the sealed vessel is heated to the temperature of 490°C to 610°C both inclusive with introducing a hydrogen gas into the sealed vessel. Upon heating, the oxide film and sodium aluminum dioxide (NaAlO₂) on the aluminum surface are transformed to the needle-like iota alumina by the diffusion of sodium oxide and the crystallization of aluminum oxide by the fluoride; when sodium oxide reaches the aluminum (Al) surface, the formation of sodium hydride (NaH) by the reducing action of aluminum starts. The sodium borohydride reaction starts when the sodium hydride (NaH) diffuses through the iota alumina and becomes in contact with sodium borate. When sodium borohydride fills the iota alumina layer, sodium hydride (NaH), sodium oxide (Na₂O), an aluminum ion, a borate ion, and so forth can move using the sodium borohydride as the solvent, and the "particle agitation reaction" starts. A weak agitation is sufficient for the particle agitation reaction because mass transfer is possible only by contact of the particles. The agitating means in the sealed vessel is rotated for agitation. In this way, the reaction products are obtained.

### (d) Fourth Step

The fourth step (S-34) illustrated in FIG. 5 is to wash the reaction products with a polar solvent. Here, the polar solvent is water. At the fourth step, the reaction products are stirred with water at the temperature of 80°C to 100°C both inclusive for at least 30 minutes. With this, sodium borohydride (NaBH₄), sodium hydride (NaH), sodium fluoride (NaF), lower aluminum fluoride (AlF_{1.5}), sodium borates, and sodium aluminum dioxide (NaAlO₂) are eluted out from the reaction products into the polar solvent. The reaction product is then taken out from the solvent and dried under a reduced pressure.

### [Fourth Production Method]

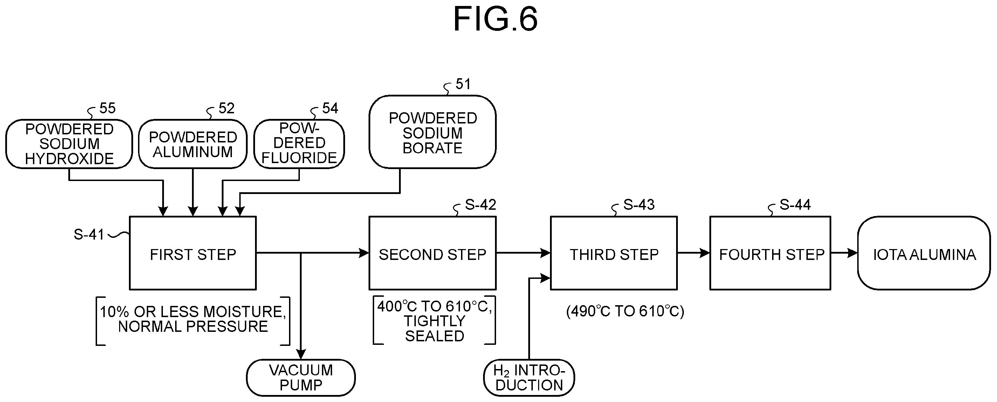

FIG. 6 is a process diagram of the fourth production method of the iota alumina. In the fourth production method of sodium borohydride, at the first step, the powdered aluminum 52, the powdered sodium hydroxide 55, the powdered fluoride 54, and the powdered sodium borate 51 are mixed, charged into the sealed vessel, filled with the non-oxidizing gas, and then the vessel is sealed. At the second step, the sealed vessel is heated at the temperature of 400°C to 610°C both inclusive to cause the fluoride to react with the moisture generated from the raw materials to generate hydrogen fluoride in a gaseous state, which reacts with aluminum to generate aluminum fluoride on the aluminum surface. At the third step, the reaction is carried out in the sealed vessel filled with a hydrogen gas at the temperature of 490°C to 610°C both inclusive. The sodium borates and the powdered aluminum react as the both are in the solid state. The fourth production method of sodium borohydride includes the steps from the first step (S-41) through the fourth step (S-44), as illustrated in FIG. 6. Here, the first (S-41) to third (S-43) steps are one example of the "reaction step" and the fourth step (S-44) is one example of the "washing step".

### (a) First Step

As the pretreatment step, the powdered aluminum 52, the powdered sodium hydroxide 55, and the powdered fluoride 54 are mixed and rubbed together in an atmosphere of the humidity of 10% or less, then powdered sodium borate 51 is mixed, and they are charged into the sealed vessel, and after or before charging them into the sealed vessel, a non-oxidizing gas is introduced, and thereby the inside thereof is filled with the non-oxidizing gas atmosphere. The above process is the first step (S-41). The timing for introduction of the non-oxidizing gas may be after or before the raw materials are charged into the sealed vessel. The method of mixing the raw materials is not limited to this; all the raw materials, i.e., the powdered aluminum 52, the powdered sodium hydroxide 55, the powdered fluoride 54, and the powdered sodium borate 51, may be mixed simultaneously and rubbed together.

### (b) Second Step

At the second step (S-42) described in FIG. 6, after the sealed vessel is sealed, the inside of the vessel is heated to the temperature of 400°C to 610°C both inclusive so as to remove the remaining water included in the sodium hydroxide, the sodium borate, the powdered aluminum, and the powdered fluoride by reacting with aluminum (Al). Also, at this step, a high-temperature water allows to react with the fluoride to generate a vapor of hydrogen fluoride (HF) to generate aluminum fluoride on the aluminum surface. At this time, sodium hydroxide is transformed to sodium oxide. Some sodium oxide also reacts with the oxide film on the aluminum surface to generate sodium aluminum dioxide (NaAlO₂). The second step is to remove residual water included in the raw materials in the sealed vessel to produce aluminum fluoride.

### (c) Third Step

At the third step (S-43) described in FIG. 6, the inside of the sealed vessel is heated to the temperature of 490°C to 610°C both inclusive with introducing a hydrogen gas into the sealed vessel. Upon heating, the oxide film and sodium aluminum dioxide (NaAlO₂) on the aluminum surface are transformed to the needle-like iota alumina by the diffusion of sodium oxide and the crystallization of aluminum oxide by the fluoride; when sodium oxide reaches the aluminum (Al) surface, the formation of sodium hydride (NaH) by the reducing action of aluminum starts. The sodium borohydride formation reaction starts when sodium hydride (NaH) diffuses through the iota alumina and comes in contact with sodium borate. When sodium borohydride fills the iota alumina layer, sodium hydride (NaH), sodium oxide (Na₂O), an aluminum ion, a borate ion, and so forth can move using the sodium borohydride as the solvent, and the "particle agitation reaction" starts. The aluminum fluoride formed on the aluminum surface at the second step takes up the diffused sodium ion to become cryolite (Na₃AlF₆), thereby forming an NaAlF layer on the aluminum surface. The NaAlF layer generates a lower aluminum fluoride (AlF_{1.5}) at the interface with Al, which moves through the system as the strong reducing substance and as the vapor that is mobile, reacting with sodium oxide (Na₂O) to generate sodium hydride (NaH) and alumina, which aids the formation of sodium borohydride. A weak agitation is sufficient for the particle agitation reaction because mass transfer is possible only by contact of the particles. The agitating means in the sealed vessel is rotated for agitation. In this way, the reaction products are obtained.

### (d) Fourth Step

The fourth step (S-44) illustrated in FIG. 6 is to wash the reaction products with a polar solvent. Here, the polar solvent is water. At the fourth step, the reaction products are stirred with water at the temperature of 80°C to 100°C both inclusive for at least 30 minutes. With this, sodium borohydride (NaBH₄), sodium hydride (NaH), sodium fluoride (NaF), lower aluminum fluoride (AlF_{1.5}), sodium borates, and sodium aluminum dioxide (NaAlO₂) are eluted out from the reaction products into the polar solvent. The reaction product is then taken out from the solvent and dried under a reduced pressure.

### (Sealed Vessel)

Hereinafter, an example of the sealed vessel that may be used at the first through fourth production methods will be described.

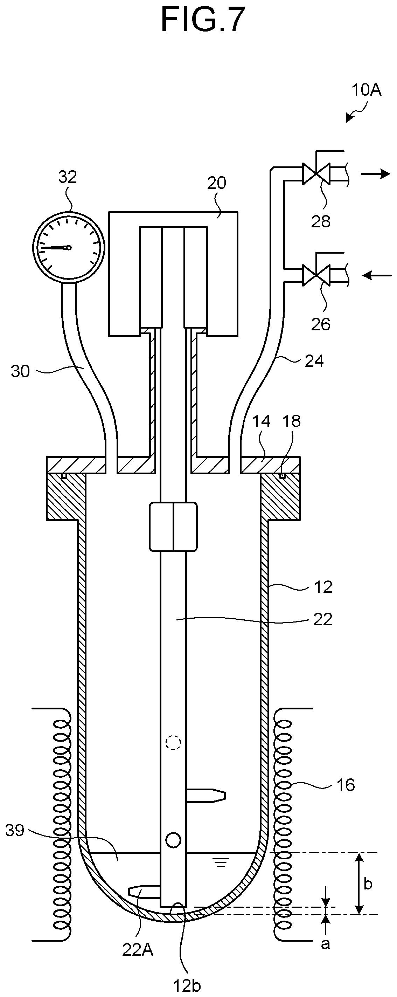

FIG. 7 is a partial cross-sectional view of one example of the sealed vessel used in the first through fourth production methods.

As can be seen in FIG. 7, a sealed vessel 10A has a round-bottomed cylindrical vessel main body 12 and a removable, disk-shaped lid 14 that seals the vessel main body 12. A temperature-controllable heater 16 is disposed on the lower outer side of the vessel main body 12, so that the contents of the vessel main body 12 are heated by the heater 16. An O-ring 18 is disposed on the upper end surface of the vessel main body 12 to ensure airtightness of the inside of the vessel by tightly attaching to the lid 14; when the lid 14 is closed, the lid 14 is in close contact with the O-ring 18 against the vessel main body 12.

The lid 14 has an opening in its center, a cylindrical section is erected near the opening, and a motor 20 is disposed on the upper side of the cylindrical section. The agitator has the motor 20, an agitator rod 22 connected to the rotary shaft of the motor 20, and a plurality of pin-shaped stirrers 22A arranged in a direction orthogonal to the axis of the agitator rod 22. When the lid 14 is attached to the vessel main body 12, the tip of the agitator rod 22 reaches the lower area inside the vessel main body 12. In other words, when the motor 20 is driven, the pin-shaped stirrer 22A rotates together with the agitator rod 22, and the contents in the vessel main body 12 are stirred.

The lid 14 is further provided with a first pipe 24 and a second pipe 30 that communicate with the inside of the vessel main body 12. The first pipe 24 is connected to a hydrogen gas supply source (not illustrated in the drawing) via a hydrogen gas supply valve 26 and to a vacuum pump (not illustrated in the drawing) via an exhaust valve 28. That is, when the hydrogen gas supply valve 26 is opened, a hydrogen gas is supplied into 12, and when the exhaust valve 28 is opened, the vessel main body 12 is degassed. The second pipe 30 is connected to a pressure gauge 32; and thus, the pressure in the vessel main body 12 can be known by the pressure gauge 32.

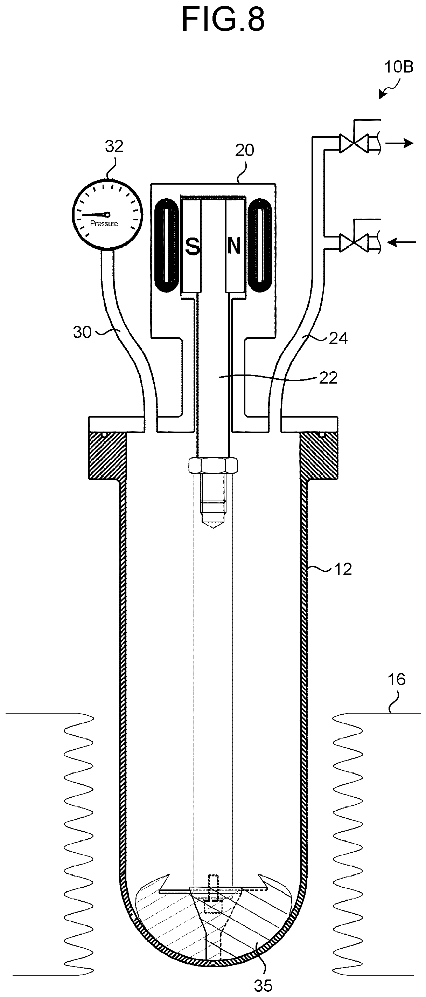

FIG. 8 is a partial cross-sectional view of another example of the sealed vessel used in the first through fourth production methods. The difference from the sealed vessel 10A in FIG. 7 is that in the sealed vessel 10B, a plurality of plate scrapers 35 is arranged at the lower end of the agitator rod 22 that rotates inside the vessel main body 12 to act as a multi-blade scraper (MB).

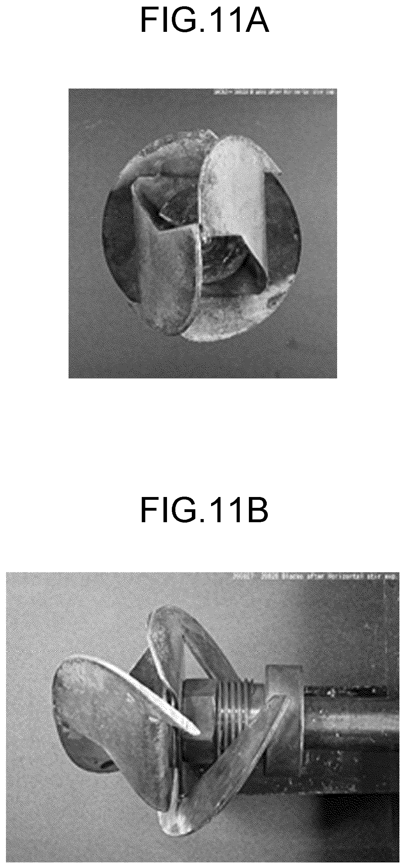

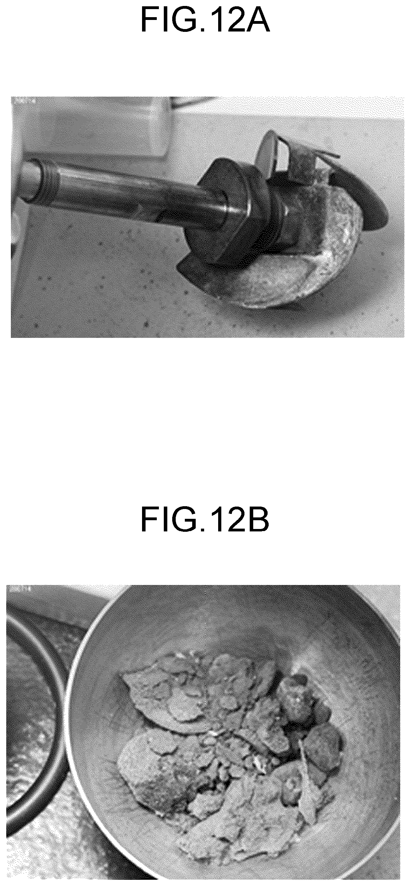

FIG. 11A is a front view of an agitator, having plate (blade)-shaped stirrers and used in the sealed vessel 10B described in FIG. 8. FIG. 11B is a side view of the agitator, having the plate (blade)-shaped stirrers and used in the sealed vessel 10B described in FIG. 8. FIG. 12A is a photograph of the plate (blade)-shaped stirrers having the reaction product taken out from the sealed vessel described in FIG. 8 after the completion of stirring for a predetermined time. FIG. 12B is a photograph of the reaction product that is taken out from the sealed vessel described in FIG. 8 after the completion of stirring for a predetermined time. As can be seen in FIG. 12A, the dumpling-like reaction products on the blade and the adhesion layer attached to the vessel wall may be recognized.

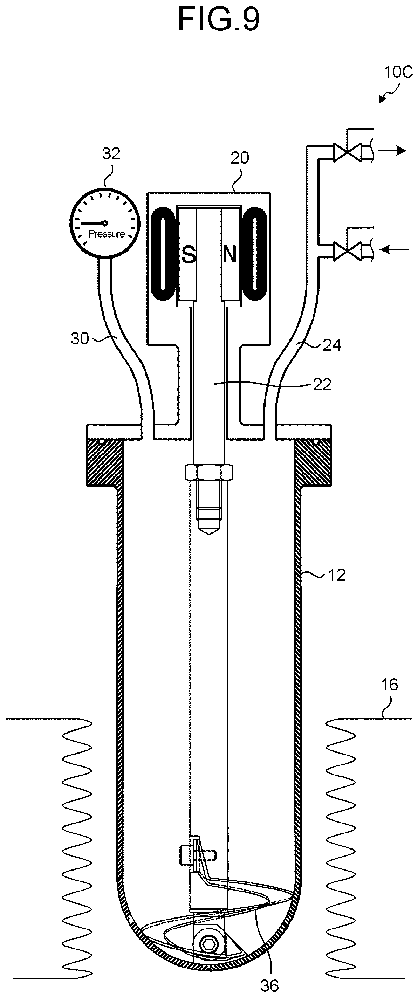

FIG. 9 is a partial cross-sectional view of another example of the sealed vessel used in the first through fourth production methods. The difference from the sealed vessel 10A in FIG. 7 is that in a sealed vessel 10C, a ribbon-shaped scraper 36 is arranged at the lower end of the agitator rod 22 that rotates inside the vessel main body 12.

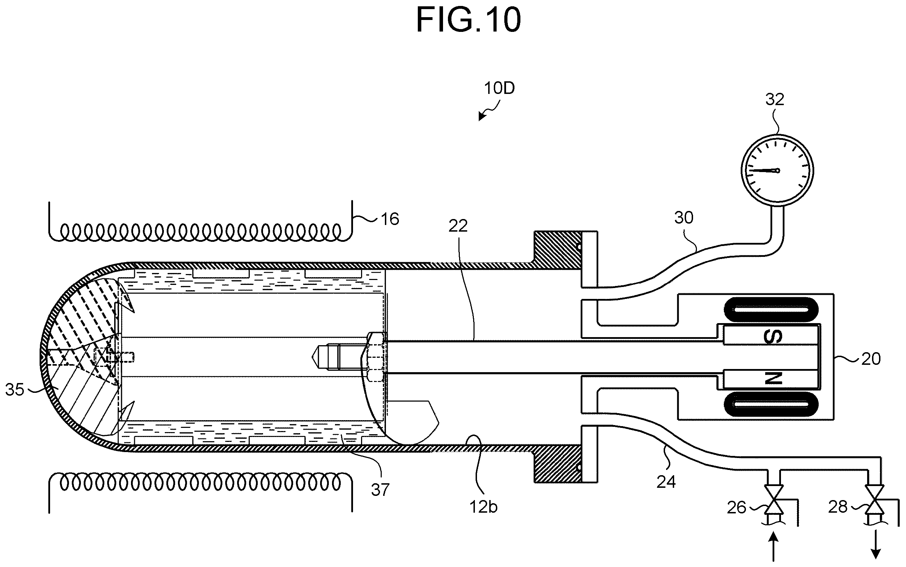

FIG. 10 is a partial cross-sectional view of another example of the sealed vessel used in the first through fourth production methods. A sealed vessel 10D described in FIG. 10 differs from the sealed vessel 10A described in FIG. 7 in that the vessel main body 12 is a horizontal type and the agitator rod 22 rotating inside a vessel main body 12b is provided with a wide paddle stirrer 37 via a support portion. When the wide paddle stirrer 37 is used for agitation in the vessel such as the sealed vessel 10D, the raw materials are scooped up by the paddle surface thereof as the wide paddle agitator 37 rotates. While the raw materials are being scooped up by the paddle surface or while the scooped materials are falling, the particles of the raw materials collide with each other so that the particle agitation reaction proceeds well.

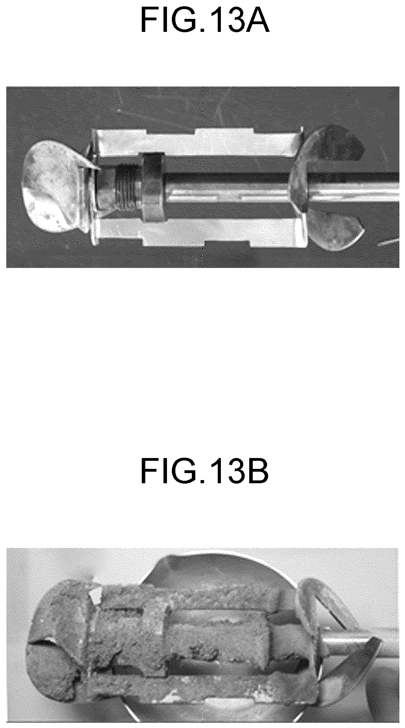

FIG. 13A is a photograph before production of the iota alumina by rotating the horizontal wide paddle (WP) agitator of the sealed vessel described in FIG. 10. FIG. 13B is a photograph after production of the iota alumina by rotating the horizontal wide paddle (WP) agitator of the sealed vessel described in FIG. 10.

In the above description, one example of the sealed vessel that may be used in the first through fourth production methods is described, but the method is not limited to the above vessels in this embodiment. For example, a ball mill that is capable of being heated and of being introduced with a hydrogen gas may be used as the sealed vessel.

### (Action of Fluoride)

Hereinafter, with referring to the drawings, the action of the fluoride in the production process of the iota alumina in the first to four production methods will be described in detail.

The action of fluoride is to increase the production amount of the iota alumina by promoting the formation of sodium hydride (NaH), as described before. Specifically, the fluoride has two actions on aluminum.

The first action is to promote the crystallization of alumina. This prevents the aluminum ion from eluting out from alumina. As a result, the amount of the aluminum ion decreases in the reaction system, so that the sodium concentration in the reaction system can be made relatively high. Accordingly, the increase of an activity of the sodium ion causes to increase a reducing power of aluminum, thereby resulting in enhancement of the formation of sodium hydride (NaH).

The second action is to form the NaAlF layer on the surface of the aluminum particle, thereby producing a lower aluminum fluoride (AlF_{1.5}) that has a strong reducing power. The lower aluminum fluoride moves outward from the aluminum surface to reduce sodium oxide (Na₂O). This increases the production amount of sodium hydride (NaH). The lower aluminum fluoride (AlF_{1.5}) has a pressure as a gas at the temperature of the iota alumina formation reaction, so that this is possible to move also as a gas. Sodium hydride (NaH) likewise has a pressure as a gas, which moves, together with the lower aluminum fluoride (AlF_{1.5}), to the sodium borate particle to form sodium borohydride.

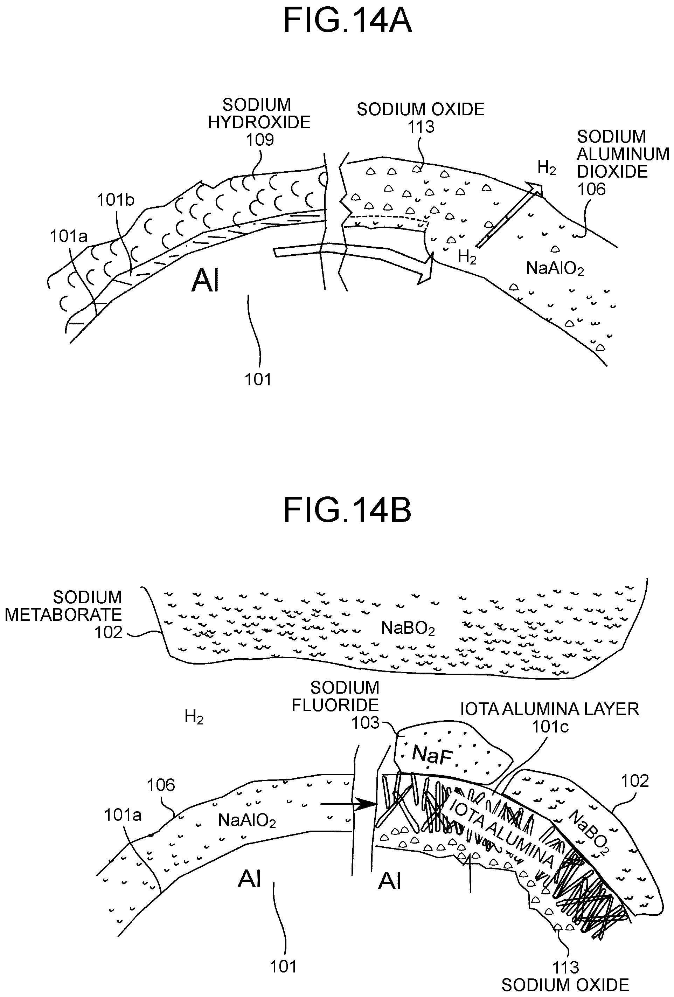

FIGS. 14A through 14F are reaction diagrams schematically illustrating the iota alumina formation reaction. Hereinafter, as an example, using the production method involving the first through fourth production methods in which sodium fluoride (NaF) is used, the action of the fluoride at each step in the forming process of the iota alumina will be described in detail with referring to the schematic reaction drawings (FIGS. 14A to 14F). Note that the actions described below are not limited to sodium fluoride. In other words, even a fluoride other than sodium fluoride has the same effect as sodium fluoride because it becomes the fluoride ion in the reaction system.

### 1) Modification of Aluminum Surface for Moisture Removal (Second Step)

As illustrated in FIG. 14A, at the second step, the water generated in the sealed reaction vessel is reacted with the fluoride to form hydrogen fluoride, which then reacts with aluminum to form the NaAlF layer, mainly composed of cryolite (Na₃AlF₆), on the aluminum surface.

In the case when sodium hydroxide (NaOH) is added, at the second step the water, which remains in the added sodium hydroxide (NaOH), sodium borates, and aluminum oxide film 101b, is removed, thereby forming sodium oxide from sodium hydroxide, which is then reacts with aluminum to form sodium aluminum dioxide (NaAlO₂).

### 2) Reaction Initial Stage-1 (Third Step)

As illustrated in FIG. 14B, the sodium aluminum dioxide (NaAlO₂) 106 formed on the aluminum (Al) particle surface 101a is transformed by the crystallization-promoting action of the sodium fluoride (NaF) 103 to the layer of the needle-like iota alumina (Na_{0.67}Al₆O_{9.33}) 101c and sodium oxide (Na₂O).

### 3) Reaction Initial Stage-2 (Third Step)

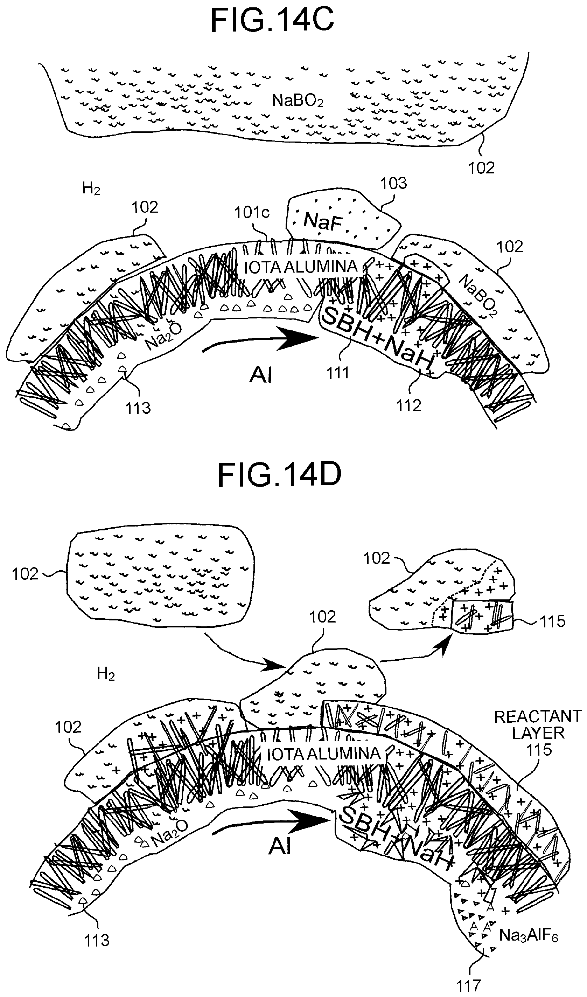

As illustrated in FIG. 14C, in the layer of the needle-like iota alumina (Na_{0.67}Al₆O_{9.33}) 101c, mainly a hydrogen gas (H₂) in the atmosphere and a sodium ion (O²⁻) of sodium metaborate move, but other ions also move through the needle-like iota alumina crystals to reach the inside of the iota alumina layer. In the presence of the sodium oxide (Na₂O) formed in the reaction initial stage-1, as well as in the presence of the hydrogen gas, the sodium ion, the borate ion, the oxygen ion, and the fluoride ion, these having moved through the iota alumina layer, the reaction that the sodium oxide (Na₂O) is continuously reduced to aluminum starts inside of the needle-like iota alumina (Na_{0.67}Al₆O_{9.33}) 101c layer. With this reaction, sodium hydride (NaH) 112 and aluminum oxide (Al₂O₃) are generated, and this aluminum oxide is immediately converted to sodium aluminum dioxide (NaAlO₂). By the catalytic action of the fluoride ion, the sodium aluminum dioxide (NaAlO₂) is decomposed into the iota alumina (Na_{0.67}Al₆O_{9.33}) 101c and sodium oxide (Na₂O) 113.

Sodium hydride (NaH) reacts with boric acid (B₂O₃) to generate sodium borohydride (NaBH₄) 111 and sodium oxide (Na₂O) .

Sodium borohydride (NaBH₄), which is the molten body, exudes together with sodium hydride (NaH) 112 to outside of the layer of the needle-like iota alumina (Na_{0.67}Al₆O_{9.33}) 101c. Then, sodium borohydride (NaBH₄) containing mainly sodium hydride (NaH) moves to outside of the layer of the iota alumina (Na_{0.67}Al₆O_{9.33}) 101c.

### 4) Reaction Middle Stage (Third Step)

As illustrated in FIG. 14D, the particle agitation reaction allows mainly sodium hydride (NaH), the aluminum ion (Al³⁺), the sodium metaborate ion (BO²⁻) from sodium metaborate (NaBO₂) 102, the oxygen ion (O²⁻), and the sodium ion (O²⁻) to move from inside of the aluminum particle through the layer of needle-like iota alumina (Na_{0.67}Al₆O_{9.33}) 101c that is filled with a liquid sodium borohydride (NaBH₄) containing the products, and whereby causing the reaction to start both inside and outside of the layer of the needle-like iota alumina (Na_{0.67}Al₆O_{9.33}) 101c. In the reaction in the sodium metaborate particle, sodium borohydride (NaBH₄) containing sodium hydride (NaH) reacts with boric acid (B₂O₃) to form sodium borohydride (NaBH₄) and sodium oxide (Na₂O). Then, sodium oxide (Na₂O) is again in contact with the aluminum particle by agitation, resulting in a cycle reaction.

### 5) Reaction Peak Period (Third Step)

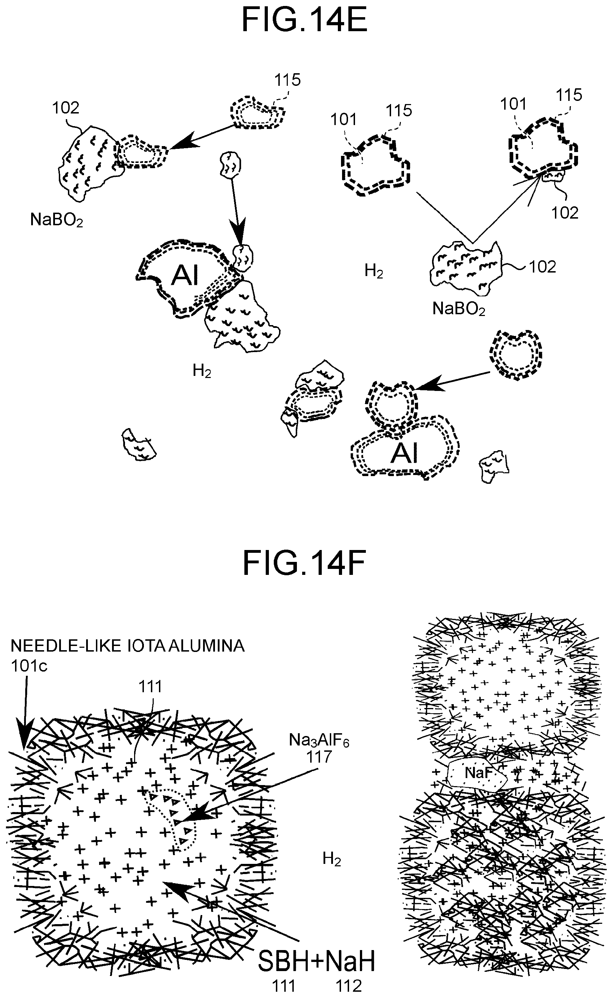

As illustrated in FIG. 14E, the agitation causes the materials on surfaces of the aluminum and sodium metaborate particles to be exchanged between particles, allowing to perform the particle agitation reaction. Through the repeated particle-to-particle contact, the aluminum particles 101 are supplied with sodium metaborate (NaBO₂) 102 and sodium oxide (Na₂O), which is the reaction product, from the particle of sodium metaborate 102. On the other hand, the particles of sodium metaborate (NaBO₂) 102 are supplied with reaction products (sodium borohydride (NaBH₄) 111 and sodium hydride (NaH) 112) from the particles of aluminum 101. The rapid exchange of these materials by particle agitation facilitates the particle agitation reaction, and whereby the aluminum particle gradually takes up broken pieces of sodium metaborate and grows. On the other hand, the sodium metaborate particle also takes up sodium hydride so that it is transformed to sodium borohydride (NaBH₄) and sodium oxide.

### 6) Termination of Reaction (Third Step)

As illustrated in FIG. 14F, in the second half of the reaction, the raw materials aluminum, sodium oxide (Na₂O), and boric acid (B₂O₃) are consumed, causing the particles to become the products sodium borohydride (NaBH₄) and the iota alumina.

The reaction rate decreases as the concentration decreases because of the decrease in formation of sodium hydride by the reduction of sodium oxide with aluminum.

On the other hand, a reducing substance (presumably lower aluminum fluoride = AlF_{1.5}) 117 that is formed at the interface of aluminum (Al) with the NaAlF layer, which is mainly composed of sodium hexafluoroaluminate (Na₃AlF₆), continues to be formed independent of the sodium oxide concentration. The sublimable lower aluminum fluoride is movable, reducing sodium oxide to produce sodium hydride (NaH) 112 and thereby increasing the yield of sodium borohydride (NaBH₄) in the second half of the reaction. As a result, the aluminum (Al) 101 and sodium metaborate particles become a layer of the reaction product sodium borohydride (NaBH₄) 111 and the needle-like iota alumina (Na_{0.67}Al₆O_{9.33}) 101c.

### (Test Examples)

Hereinafter, this embodiment will be described in more detail by Test Examples that explain the advantageous effects of this embodiment, but this embodiment is not limited to these Test Examples.

Table 1 describes the materials and production conditions in Test Examples 1 through 25. In these tests, the materials and production conditions described in Table 1 are used to synthesize the products in Test Examples 1 through 25. In Table 1 and the following explanation, Na/B or the Na/B ratio refers to A/B (mole ratio) when the alkali metal and alkaline earth metal contained in the raw materials is only sodium (Na), and the K/B ratio refers to A/B (molar ratio) when the alkali metal and alkaline earth metal contained in the raw material is only potassium (K). In Table 1 and the following examples, "pure water" refers to ion-exchanged water, which has a pH of 5.5 to 7.5 both inclusive.

**Table 1**

| No. | Alkali metal compound [g] | | | | Fluoride [g] | Al [g] | NaOH [g] | (Na, K)/B (molar ratio) | Hydrogen partial pressure [MPa] | | Heating temp. [°C] | Washing solvent |
|---|---|---|---|---|---|---|---|---|---|---|---|---|
| | NaBO₂ | Na₄B₂O₅ | Na₂B₄O₇ | KBO₂ | | | | | Maximum | Minimum | | |
| Test Example 1 | 6.98 | - | 8.01 | - | NaF: 2.17 | 11.45 | - | 0.89 | 0.75 | 0.6 | 510 | - |
| Test Example 2 | 1.95 | - | - | - | KF: 0.05 | 1.06 | - | 1.03 | 0.90 | 0.51 | 569 | Pure water (high temp.) |
| Test Example 3 | 17.46 | - | - | - | AlF₃: 1.44 | 11.45 | - | 1.00 | 0.75 | 0.56 | 510 | - |
| Test Example 4 | 17.46 | - | - | - | Na₃AlF₆: 1.81 | 11.45 | - | 1.10 | 0.75 | 0.54 | 510 | Diglyme |
| Test Example 5 | - | - | 1.48 | - | NaF: 0.83 | 1.27 | - | 1.17 | 0.86 | 0.63 | 500 | Diglyme |
| Test Example 6 | 17.46 | - | - | - | NaF: 2.17 | 11.45 | - | 1.19 | 0.75 | 0.64 | 490 | - |
| Test Example 7 | 17.46 | - | - | - | NaF: 2.17 | 11.45 | - | 1.19 | 0.75 | 0.64 | 490 | Pure water (high temp.) |
| Test Example 8 | 17.46 | - | - | - | NaF: 1.86 | 11.45 | 0.31 | 1.20 | 0.75 | 0.65 | 530 | - |
| Test Example 9 | 17.46 | - | - | - | NaF: 1.86 | 11.45 | 0.31 | 1.20 | 0.75 | 0.65 | 530 | Diglyme |
| Test Example 10 | 17.46 | - | - | - | NaF: 1.86 | 11.45 | 0.29 | 1.19 | 0.75 | 0.69 | 470 | Pure water (high temp.) |
| Test Example 11 | 5.82 | - | - | - | NaF: 0.62 | 3.82 | 0.10 | 1.20 | 0.75 | 0.63 | 560 | Pure water (high temp.) |
| Test Example 12 | 1.94 | - | - | - | NaF: 0.83 | 1.48 | - | 1.67 | 0.89 | 0.45 | 495 | Diglyme |
| Test Example 13 | 1.94 | - | - | - | - | 1.28 | - | 1.00 | 0.78 | 0.59 | 330 | - |
| Test Example 14 | 17.46 | - | - | - | NaF: 2.17 | 11.45 | - | 1.19 | 0.75 | 0.64 | 490 | Aq. 2% by mass NaOH soln. |
| Test Example 15 | - | 2.94 | - | - | NaF: 0.83 | 1.28 | - | 2.65 | 0.86 | 0.61 | 495 | Diglyme |
| Test Example 16 | 5.85 | - | - | - | - | 9.54 | - | 1.00 | 1.05 | 0.89 | 710 | - |
| Test Example 17 | 17.46 | - | - | - | NaF: 1.86 | 11.45 | 0.28 | 1.19 | 0.76 | 0.69 | 450 | Pure water (high temp.) |
| Test Example 18 | 17.46 | - | - | - | - | 11.45 | 2.06 | 1.19 | 0.74 | 0.69 | 510 | - |
| Test Example 19 | 19.40 | - | - | - | NaF: 2.41 | 10.60 | - | 1.19 | 0.81 | 0.78 | 580 | Pure water (high temp.) |
| Test Example 20 | 19.40 | - | - | - | NaF: 2.41 | 10.60 | - | 1.19 | 0.81 | 0.78 | 610 | Pure water (high temp.) |
| Test Example 21 | 17.46 | - | - | - | NaF: 2.42 | 11.45 | - | 1.22 | 0.84 | 0.78 | 510 | Pure water (high temp.) |
| Test Example 22 | 17.46 | - | - | - | NaF: 2.42 | 11.45 | - | 1.22 | 0.84 | 0.78 | 510 | Pure water (high temp.) |
| Test Example 23 | 17.46 | - | - | - | NaF: 2.42 | 11.45 | - | 1.22 | 0.84 | 0.78 | 510 | Aq. 0.875% by mass HCl soln. |
| Test Example 24 | - | - | - | 7.24 | KF: 1.00 | 3.82 | - | 1.19 | 0.78 | 0.68 | 522 | - |
| Test Example 25 | - | - | - | 7.24 | KF: 1.00 | 3.82 | - | 1.19 | 0.78 | 0.68 | 522 | Pure water (high temp.) |

Table 2 is the list of the substances detected in the product obtained by the production methods in Examples 1 through 23. Table 3 is the list of the substances detected in the products obtained by the production methods in Test Examples 24 and 25. The powder X-ray diffraction measurement is conducted on the products in Test Examples 1 through 25 to identify the substances listed in Table 2 or Table 3. Here, the powder X-ray diffraction measurement is conducted at the normal temperature (or room temperature) and normal pressure, i.e., 5°C to 35°C both inclusive and 1 atm, unless otherwise specifically noted. In the diffraction pattern of the products, the intensities of the peaks derived from the contents thereof are dependent on the composition ratio of the contents of the products. Therefore, the content that appears as a strong peak and therefore there is no doubt in its presence is judged as "A"; the content that appears as a smaller peak than the content judged as A and therefore the content thereof is estimated to be small is judged as "B"; the content that appears as an even smaller peak than the content judged as B and therefore the content thereof is estimated to be slight is judged as "C", and the content that appears as an even smaller peak than the content judged as C and therefore the content thereof is trace is judged as "D".

**Table 2**

| No. | NaBH₄ | Na_{0.67}Al₆O_{9.33} | NaAlO₂ | Na₃AlF₆ | NaF | NaBO₂ | Na₂B₄O₇ | AlB₂ | Al | Al(OH)₃ |
|---|---|---|---|---|---|---|---|---|---|---|
| Test Example 1 | A | A | - | C | - | A | C | A | - | - |
| Test Example 2 | - | A | - | - | - | - | - | - | A | - |
| Test Example 3 | A | A | - | C | - | B | - | - | A | - |
| Test Example 4 | - | A | - | C | - | B | - | - | B | - |
| Test Example 5 | - | A | - | - | - | - | - | - | B | - |
| Test Example 6 | A | A | - | C | - | B | - | - | B | - |
| Test Example 7 | - | A | - | C | - | - | - | - | D | - |
| Test Example 8 | A | A | - | C | C | - | - | - | B | - |
| Test Example 9 | - | A | - | C | C | - | - | - | A | - |
| Test Example 10 | - | A | - | B | - | - | - | - | A | C |
| Test Example 11 | - | A | - | C | - | - | - | - | B | B |
| Test Example 12 | - | A | B | B | - | - | - | - | A | - |
| Test Example 13 | - | - | - | - | - | A | - | - | A | - |
| Test Example 14 | - | A | - | - | - | - | - | - | - | A |
| Test Example 15 | - | B | A | - | A | - | - | - | B | - |
| Test Example 16 | - | B | B | - | - | - | - | - | A | - |
| Test Example 17 | - | B | - | B | - | - | - | - | A | C |
| Test Example 18 | - | B | - | - | A | - | - | A | - | - |
| Test Example 19 | - | A | - | - | - | - | - | - | - | A |
| Test Example 20 | - | A | - | B | - | - | - | C | A | - |
| Test Example 21 | - | A | - | - | - | - | - | - | - | B |
| Test Example 22 | - | A | - | C | - | - | - | - | B | - |
| Test Example 23 | - | A | - | C | - | - | - | - | B | - |

**Table 3**

| No. | KBH₄ | K_{0.67}Al₆O_{9.33} | K₃AlF₆ | KBO₂ | Al | Al(OH)₃ |
|---|---|---|---|---|---|---|
| Test Example 24 | B | B | B | A | A | - |
| Test Example 25 | - | A | B | - | A | B |

### [Test Example 1]

Test Example 1 is a comparative example.

As described in Table 1, 6.98 g of powdered sodium metaborate (NaBO₂), 8.01 g of powdered sodium tetraborate (Na₂B₄O₇), 2.17 g of powdered sodium fluoride (NaF), and 11.45 g of powdered aluminum (Al) are charged as the raw materials into the sealed vessel equipped with the agitator. Here, the Na/B ratio in Test Example 1 is 0.89. At this reaction step, the inside of the sealed vessel is heated to 510°C with introducing a hydrogen gas and with stirring by means of the agitator in the sealed vessel. The maximum partial pressure of the hydrogen gas at the reaction step is 0.75 MPa. The minimum partial pressure of the hydrogen gas at the reaction step is 0.6 MPa. In Test Example 1, the washing step is omitted. With the procedure described above, the products in Test Example 1 are obtained.

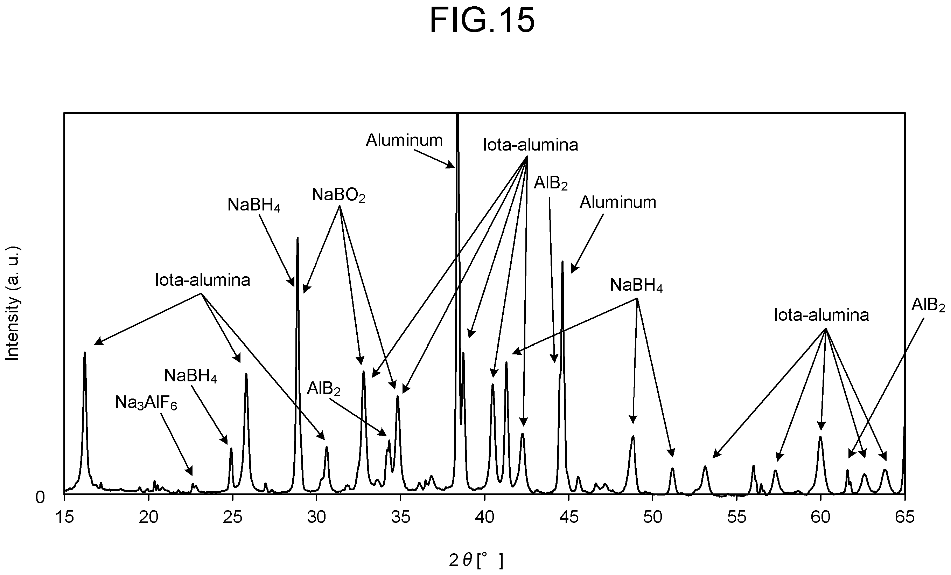

FIG. 15 is the X-ray diffraction pattern of the products in Test Example 1. In Test Example 1, products containing the iota alumina (Na_{0.67}Al₆O_{9.33}) as the main component are obtained. As can be seen in Table 2 and FIG. 15, in the products of Test Example 1, sodium iota alumina (Na_{0.67}Al₆O_{9.33}), sodium borohydride (NaBH₄), sodium metaborate (NaBO₂), and aluminum (Al) are detected as the components for the judgement A; sodium hexafluoroaluminate (Na₃AlF₆) and sodium tetraborate (Na₂B₄O₇) are detected as the components for the judgement AlB₂C; and aluminum diboride (AlB₂) is detected as the component for the judgement D.

From the results of Test Example 1, it can be seen that it is possible to produce the iota alumina even Na/B ratio = 0.89. On the other hand, Test Example 1 omitted the washing step. Because of this, it is presumed that sodium borohydride (NaBH₄) is not removed.

### [Test Example 2]

Test Example 2 is an example.

As described in Table 1, 1.95 g of powdered sodium metaborate (NaBO₂), 0.05 g of powdered potassium fluoride (KF), and 1.06 g of powdered aluminum (Al) are charged as the raw materials into the sealed vessel equipped with the agitator. Here, the Na/B ratio of Test Example 2 is 1.03. At this reaction step, the inside of the sealed vessel is heated to 569°C with introducing a hydrogen gas and with stirring by means of the agitator in the sealed vessel. The maximum partial pressure of the hydrogen gas at the reaction step is 0.90 MPa. The minimum partial pressure of the hydrogen gas at the reaction step is 0.51 MPa. In Test Example 2, the washing step is performed using pure water at high temperature. With the procedure described above, the products in Test Example 2 are obtained.

In Test Example 2, products containing the iota alumina (Na_{0.67}Al₆O_{9.33}) as the main component are obtained. As described in Table 2, in the products for Test Example 2, the iota alumina (Na_{0.67}Al₆O_{9.33}) and aluminum (Al) are detected as the components for the judgement A.

From the results of Test Example 2, it can be seen that it is possible to produce the iota alumina even when potassium fluoride (KF) is used as the fluoride in the raw materials.

### [Test Example 3]

Test Example 3 is a comparative example.

As described in Table 1, 17.46 g of powdered sodium metaborate (NaBO₂), 1.44 g of powdered aluminum fluoride (AlF₃), and 11.45 g of powdered aluminum (Al) are charged as the raw materials into the sealed vessel equipped with the agitator. Here, the Na/B ratio of Test Example 3 is 1.00. At this reaction step, the inside of the sealed vessel is heated to 510°C with introducing a hydrogen gas and with stirring by means of the agitator in the sealed vessel. The maximum partial pressure of the hydrogen gas at the reaction step is 0.75 MPa. The minimum partial pressure of the hydrogen gas at the reaction step is 0.56 MPa. In Test Example 3, the washing step is omitted. With the procedure described above, the products in Test Example 3 are obtained.

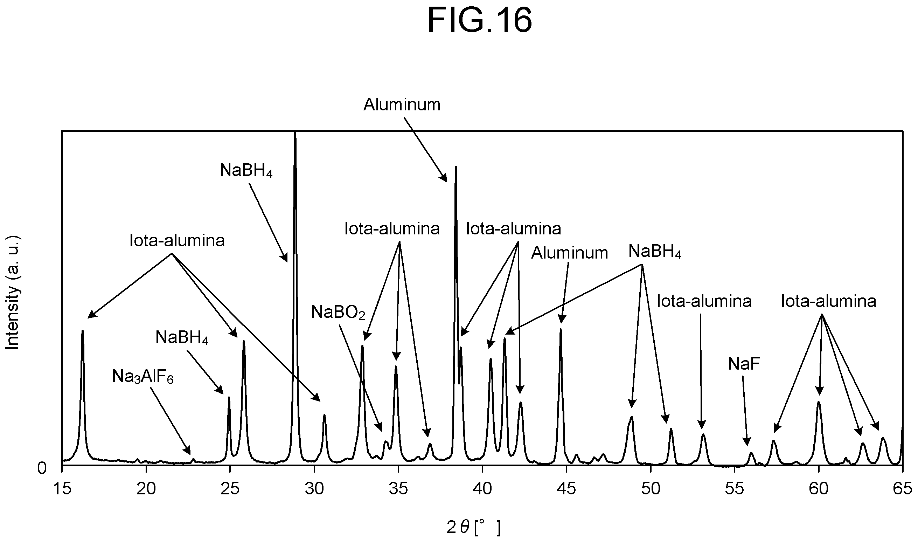

FIG. 16 is the X-ray diffraction pattern of the products in Test Example 3. In Test Example 3, products containing the iota alumina (Na_{0.67}Al₆O_{9.33}) as the main component are obtained. As can be seen in Table 2 and FIG. 16, in the products of Test Example 3, sodium borohydride (NaBH₄), iota alumina (Na_{0.67}Al₆O_{9.33}), and aluminum (Al) are detected as the components for the judgement A; sodium metaborate (NaBO₂) is detected as the component for the judgement B; and sodium hexafluoroaluminate (Na₃AlF₆) is detected as the component for the judgement C.

From the results of Test Example 3, it can be seen that it is possible to produce the iota alumina even when aluminum fluoride (AlF₃) is used as the fluoride in the raw materials. On the other hand, Test Example 3 omitted the washing step. Because of this, it is presumed that sodium borohydride (NaBH₄) and sodium metaborate (NaBO₂) are not removed.

### [Test Example 4]

Test Example 4 is an example.

As described in Table 1, 17.46 g of powdered sodium metaborate (NaBO₂), 1.81 g of sodium hexafluoroaluminate (Na₃AlF₆), and 11.45 g of powdered aluminum (Al) are charged as the raw materials into the sealed vessel equipped with the agitator. Here, the Na/B ratio in Test Example 4 is 1.10. At this reaction step, the inside of the sealed vessel is heated to 510°C with introducing a hydrogen gas and with stirring by means of the agitator in the sealed vessel. The maximum partial pressure of the hydrogen gas at the reaction step is 0.75 MPa. The minimum partial pressure of the hydrogen gas at the reaction step is 0.54 MPa. In Test Example 4, the washing step is performed using diglyme. With the procedure described above, the products in Test Example 4 are obtained.

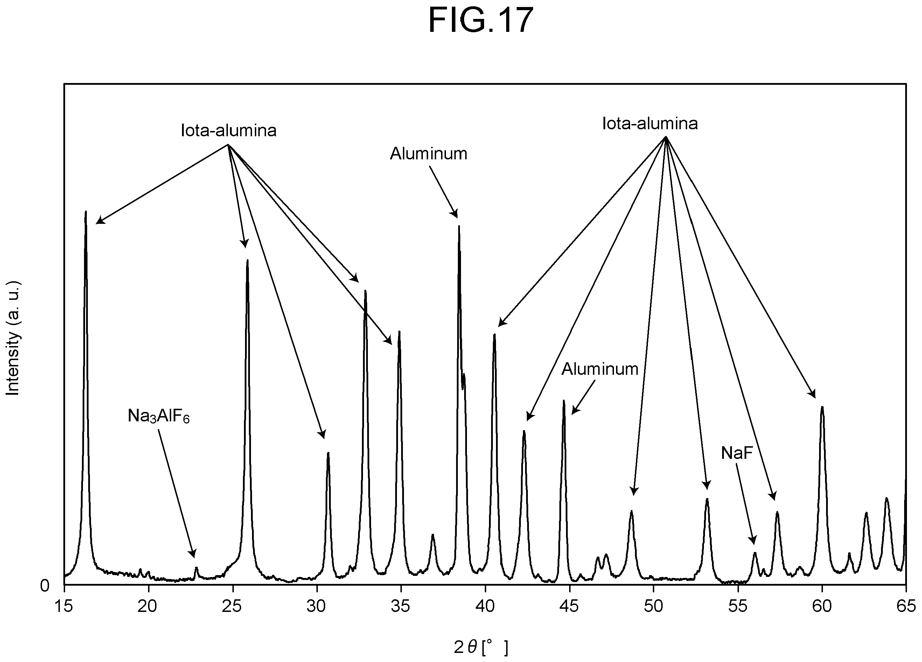

FIG. 17 is the X-ray diffraction pattern of the products in Test Example 4. In Test Example 4, products containing the iota alumina (Na_{0.67}Al₆O_{9.33}) as the main component are obtained. As can be seen in Table 2 and FIG. 17, in the products of Test Example 4, iota alumina (Na_{0.67}Al₆O_{9.33}) is detected as the component for the judgement A; aluminum (Al) and sodium metaborate (NaBO₂) are detected as the components for the judgement B; and sodium hexafluoroaluminate (Na₃AlF₆) is detected as the component for the judgement C.

From the results of Test Example 4, it can be seen that it is possible to produce the iota alumina even when sodium hexafluoroaluminate (Na₃AlF₆) is used as the fluoride in the raw materials.

### [Test Example 5]

Test Example 5 is an example.

As described in Table 1, 1.48 g of powdered sodium tetraborate (Na₂B₄O₇), 0.83 g of sodium fluoride (NaF), and 1.27 g of powdered aluminum (Al) are charged as the raw materials into the sealed vessel equipped with the agitator. Here, the Na/B ratio in Test Example 5 is 1.17. At this reaction step, the inside of the sealed vessel is heated to 500°C with introducing a hydrogen gas and with stirring by means of the agitator in the sealed vessel. The maximum partial pressure of the hydrogen gas at the reaction step is 0.86 MPa. The minimum partial pressure of the hydrogen gas at the reaction step is 0.63 MPa. In Test Example 5, the washing step is performed using diglyme. With the procedure described above, the products in Test Example 5 are obtained.

In Test Example 5, products containing the iota alumina (Na_{0.67}Al₆O_{9.33}) as the main component are obtained. As described in Table 2, in the products for Test Example 5, the iota alumina (Na_{0.67}Al₆O_{9.33}) is detected as the component for the judgement A; and aluminum (Al) is detected as the component for the judgement B.

From the results of Test Example 5, it can be seen that it is possible to produce the iota alumina even when sodium tetraborate (Na₂B₄O₇) is used as the alkali metal compound in the raw materials.

### [Test Example 6]

Test Example 6 is a comparative example.

As described in Table 1, 17.46 g of powdered sodium metaborate (NaBO₂), 2.17 g of sodium fluoride (NaF), and 11.45 g of powdered aluminum (Al) are charged as the raw materials into the sealed vessel equipped with the agitator. Here, the Na/B ratio in Test Example 6 is 1.19. At this reaction step, the inside of the sealed vessel is heated to 490°C with introducing a hydrogen gas and with stirring by means of the agitator in the sealed vessel. The maximum partial pressure of the hydrogen gas at the reaction step is 0.75 MPa. The minimum partial pressure of the hydrogen gas at the reaction step is 0.64 MPa. In Test Example 6, the washing step is omitted. With the procedure described above, the products in Test Example 6 are obtained.

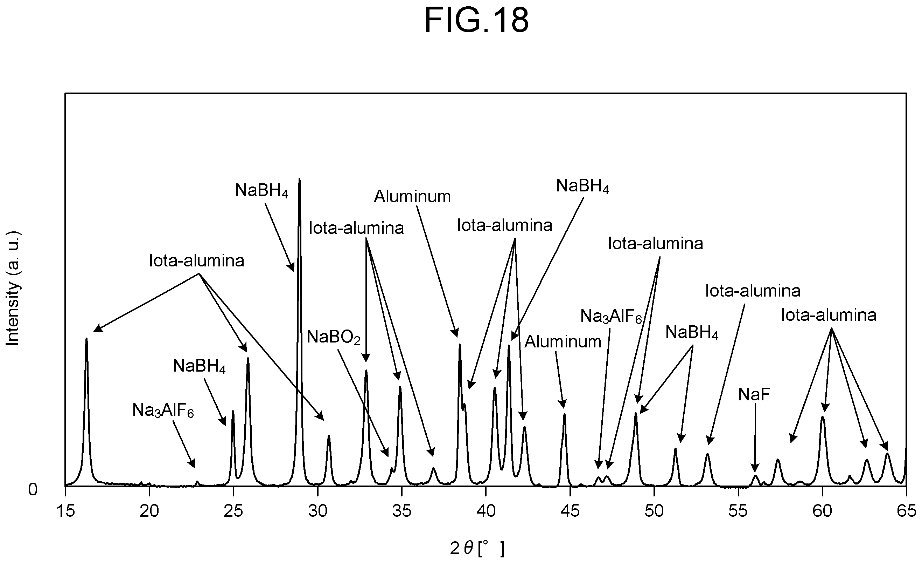

FIG. 18 is the X-ray diffraction pattern of the products in Test Example 6. In Test Example 6, products containing the iota alumina (Na_{0.67}Al₆O_{9.33}) as the main component are obtained. As can be seen in Table 2 and FIG. 18, in the products of Test Example 6, sodium borohydride (NaBH₄) and iota alumina (Na_{0.67}Al₆O_{9.33}) are detected as the components for the judgement A; and aluminum (Al) and sodium metaborate (NaBO₂) are detected as the components for the judgement B. Sodium hexafluoroaluminate (Na₃AlF₆) is detected as the component for the judgement C.

From the results of Test Example 6, it can be seen that it is possible to produce the iota alumina when the heating temperature is made 490°C. On the other hand, Test Example 6 omitted the washing step. Because of this, it is presumed that sodium borohydride (NaBH₄) and sodium metaborate (NaBO₂) are not removed.

### [Test Example 7]

Test Example 7 is an example.

As described in Table 1, the products in Test Example 7 are obtained by washing the products in Test Example 6 with pure water at high temperature of 80°C to 100°C both inclusive for 1 hour with stirring, as the washing step.

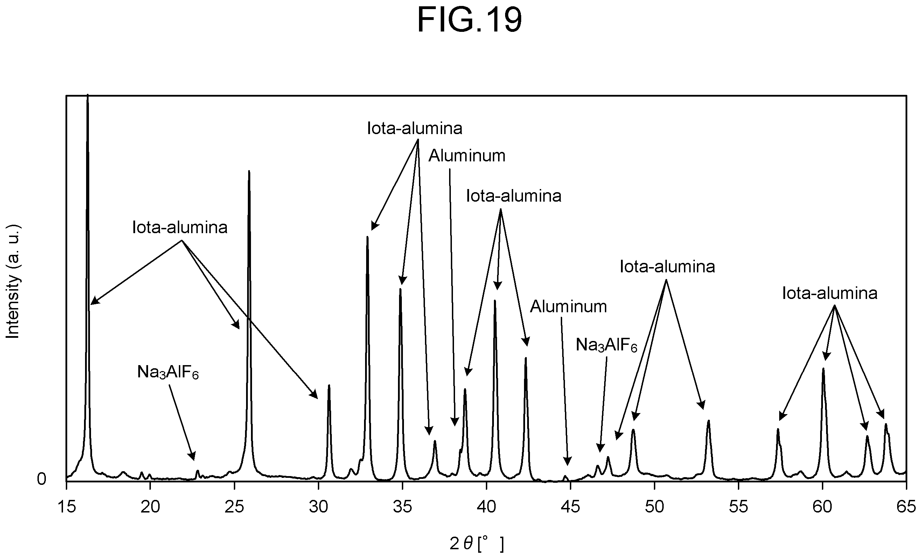

FIG. 19 is the X-ray diffraction pattern of the products in Test Example 7. In Test Example 7, products containing the iota alumina (Na_{0.67}Al₆O_{9.33}) as the main component are obtained. As can be seen in Table 2 and FIG. 19, in the products of Test Example 7, iota alumina (Na_{0.67}Al₆O_{9.33}) is detected as the component for the judgement A; sodium hexafluoroaluminate (Na₃AlF₆) is detected as the component for the judgement C; and aluminum (Al) is detected as the component for the judgement D. The X-ray diffraction pattern for Test Example 7 is consistent with the PDF (registered trademark) (Powder Diffraction File) number 01-070-7114 data for the iota alumina (Na_{0.67}Al₆O_{9.33}) , indicating there is no crystal defects.

The semi-quantitative analysis based on the Rietveld method of the X-ray diffraction chart indicated that the products contained 95% by mass of the iota alumina, 5% by mass of sodium hexafluoroaluminate, and 1% by mass or less of aluminum (Al). The specific surface area of the product, calculated by the BET (Brunauer-Emmett-Teller) method, is 54 m²g⁻¹.

From the results of Test Example 7, it can be seen that it is possible to remove sodium borohydride (NaBH₄) and sodium metaborate (NaBO₂) by washing with pure water.

The result of SEM observation of the product in Test Example 7 indicates that 80 iota alumina crystals are extracted from the image area, in which the average aspect ratio of the iota alumina crystals is calculated to be 10.8.

### [Test Example 8]

Test Example 8 is a comparative example.

As described in Table 1, 17.46 g of powdered sodium metaborate (NaBO₂), 0.31 g of sodium hydroxide (NaOH), 1.86 g of sodium fluoride (NaF), and 11.45 g of powdered aluminum (Al) are used as the raw materials. In Test Example 8, sodium hydroxide (NaOH) and powdered aluminum (Al) are mixed and rubbed together, which is then followed by the reaction at 240°C for 1 hour; then, the resulting mixture, together with powdered sodium metaborate (NaBO₂) and sodium fluoride (NaF), is charged into the sealed vessel equipped with the agitator. Here, the Na/B ratio in Test Example 8 is 1.20. At this reaction step, the inside of the sealed vessel is heated to 530°C with introducing a hydrogen gas and with stirring by means of the agitator in the sealed vessel. The maximum partial pressure of the hydrogen gas at the reaction step is 0.75 MPa. The minimum partial pressure of the hydrogen gas at the reaction step is 0.65 MPa. In Test Example 8, the washing step is omitted. With the procedure described above, the products in Test Example 8 are obtained.

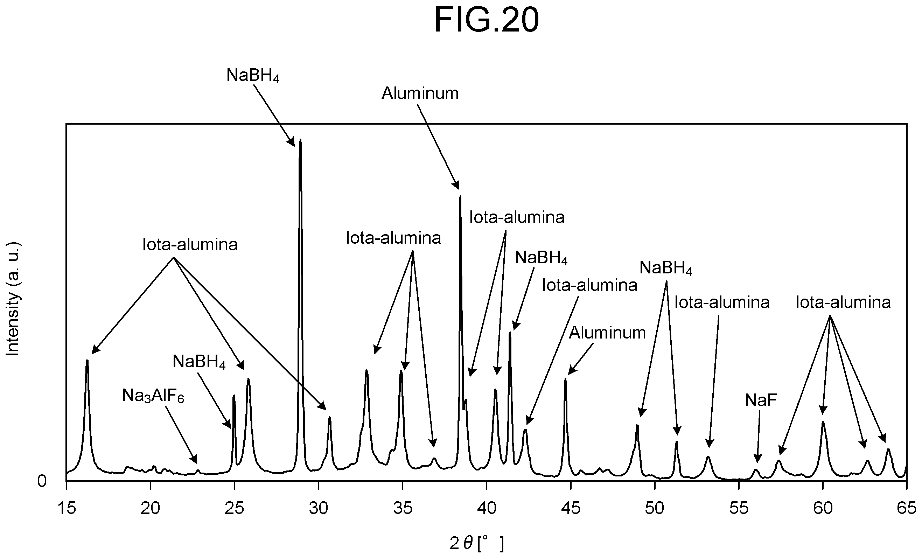

FIG. 20 is the X-ray diffraction pattern of the products in Test Example 8. In Test Example 8, products containing the iota alumina (Na_{0.67}Al₆O_{9.33}) as the main component are obtained. As can be seen in Table 2 and FIG. 20, in the products of Test Example 8, sodium borohydride (NaBH₄) and iota alumina (Na_{0.67}Al₆O_{9.33}) are detected as the components for the judgement A; aluminum (Al) is detected as the component for the judgement B; and sodium hexafluoroaluminate (Na₃AlF₆) and sodium fluoride (NaF) are detected as the components for the judgement C.

From the results of Test Example 8, it can be seen that it is possible to produce the iota alumina even when dehydration is conducted by using sodium hydroxide. On the other hand, Test Example 8 omitted the washing step. Because of this, it is presumed that sodium borohydride (NaBH₄) is not removed.

### [Test Example 9]

Test Example 9 is an example.

As described in Table 1, the products in Test Example 9 are obtained by washing the products in Test Example 8 with diglyme as the washing step.

In Test Example 9, products containing the iota alumina (Na_{0.67}Al₆O_{9.33}) as the main component are obtained. As can be seen in Table 2, in the products of Test Example 9, iota alumina (Na_{0.67}Al₆O_{9.33}) and aluminum (Al) are detected as the components for the judgement A; and sodium hexafluoroaluminate (Na₃AlF₆) and sodium fluoride (NaF) are detected as the components for the judgement C.

From the results of Test Example 9, it can be seen that it is possible to remove sodium borohydride (NaBH₄) by washing with diglyme.

### [Test Example 10]

Test Example 10 is an example.

As described in Table 1, 17.46 g of powdered sodium metaborate (NaBO₂), 0.29 g of sodium hydroxide (NaOH), 1.86 g of sodium fluoride (NaF), and 11.45 g of powdered aluminum (Al) are used as the raw materials. In Test Example 10, sodium hydroxide (NaOH) and powdered aluminum (Al) are mixed and rubbed together, which is then followed by the reaction at 240°C for 1 hour; then, the resulting mixture, together with powdered sodium metaborate (NaBO₂) and sodium fluoride (NaF), is charged into the sealed vessel equipped with the agitator. Here, the Na/B ratio in Test Example 10 is 1.19. At this reaction step, the inside of the sealed vessel is heated to 470°C with introducing a hydrogen gas and with stirring by means of the agitator in the sealed vessel. The maximum partial pressure of the hydrogen gas at the reaction step is 0.75 MPa. The minimum partial pressure of the hydrogen gas at the reaction step is 0.69 MPa. In Test Example 10, the washing step is performed using pure water at high temperature. With the procedure described above, the products in Test Example 10 are obtained.

In Test Example 10, products containing the iota alumina (Na_{0.67}Al₆O_{9.33}) as the main component are obtained. As can be seen in Table 2, in the products of Test Example 10, aluminum (Al) and iota alumina (Na_{0.67}Al₆O_{9.33}) are detected as the components for the judgement A; sodium hexafluoroaluminate (Na₃AlF₆) is detected as the component for the judgement B; and aluminum hydroxide is detected as the component for the judgement C.

From the results of Test Example 10, it can be seen that it is possible to produce the iota alumina when the heating temperature is made 470°C.

Here, it is presumed that aluminum hydroxide (Al(OH)₃) is detected because sodium metaborate (NaBO₂) remaining in the products is dissolved in water at the washing step, resulting in an alkaline solution due to the increase of the basicity of water at a high temperature of around 100°C, thereby causing some of the unreacted aluminum to be dissolved and converted to aluminum hydroxide.

### [Test Example 11]

Test Example 11 is an example.

As described in Table 1, 5.82 g of powdered sodium metaborate (NaBO₂), 0.10 g of sodium hydroxide (NaOH), 0.62 g of sodium fluoride (NaF), and 3.82 g of powdered aluminum (Al) are used as the raw materials. In Test Example 11, sodium hydroxide (NaOH) and powdered aluminum (Al) are mixed and rubbed together, which is then followed by the reaction at 240°C for 1 hour; then, the resulting mixture, together with powdered sodium metaborate (NaBO₂) and sodium fluoride (NaF), is charged into the sealed vessel equipped with the agitator. Here, the Na/B ratio in Test Example 11 is 1.20. At this reaction step, the inside of the sealed vessel is heated to 560°C with introducing a hydrogen gas and with stirring by means of the agitator in the sealed vessel. The maximum partial pressure of the hydrogen gas at the reaction step is 0.75 MPa. The minimum partial pressure of the hydrogen gas at the reaction step is 0.63 MPa. In Test Example 11, the washing step is performed using pure water at high temperature. With the procedure described above, the products in Test Example 11 are obtained.

In Test Example 11, products containing the iota alumina (Na_{0.67}Al₆O_{9.33}) as the main component are obtained. As can be seen in Table 2, as the result of the semi-quantitative analysis of the products of Test Example 11 based on the Rietveld method, 81% by mass of the iota alumina (Na_{0.67}Al₆O_{9.33}) is detected as the component for the judgement A; 7% by mass of aluminum (Al) and 8% by mass of aluminum hydroxide are detected as the components for the judgement B; and 2% by mass of sodium hexafluoroaluminate (Na₃AlF₆) is detected as the component for the judgement C.

From the results of Test Example 11, it can be seen that it is possible to produce the iota alumina when the heating temperature is made 560°C.

Here, it is presumed that aluminum hydroxide (Al(OH)₃) is detected because sodium metaborate (NaBO₂) remaining in the products is dissolved in water at the washing step, resulting in an alkaline solution due to the increase of the basicity of water at a high temperature of around 100°C, thereby causing some of the unreacted aluminum to be dissolved and converted to aluminum hydroxide (Al(OH)₃).

### [Test Example 12]

Test Example 12 is an example.

As described in Table 1, 1.94 g of powdered sodium metaborate (NaBO₂), 0.83 g of sodium fluoride (NaF), and 1.48 g of powdered aluminum (Al) are charged as the raw materials into the sealed vessel equipped with the agitator. Here, the Na/B ratio in Test Example 12 is 1.67. At this reaction step, the inside of the sealed vessel is heated to 495°C with introducing a hydrogen gas and with stirring by means of the agitator in the sealed vessel. The maximum partial pressure of the hydrogen gas at the reaction step is 0.89 MPa. The minimum partial pressure of the hydrogen gas at the reaction step is 0.45 MPa. In Test Example 12, the washing step is performed using diglyme. With the procedure described above, the products in Test Example 12 are obtained.

In Test Example 12, products containing the iota alumina (Na_{0.67}Al₆O_{9.33}) as the main component are obtained. As can be seen in Table 2, in the products of Test Example 12, iota alumina (Na_{0.67}Al₆O_{9.33}) and aluminum (Al) are detected as the components for the judgement A; and sodium hexafluoroaluminate (Na₃AlF₆) and sodium aluminate (NaAlO₂) are detected as the components for the judgement B.

From the results of Test Example 12, it can be seen that it is possible to produce the iota alumina when the heating temperature is made 495°C.

### [Test Example 13]

Test Example 13 is a comparative example.

As described in Table 1, 1.94 g of powdered sodium metaborate (NaBO₂) and 1.28 g of powdered aluminum (Al) are charged as the raw materials into the sealed vessel equipped with the agitator. Here, alumina balls (5 mm in diameter) are put into the sealed vessel as the agitating medium, and the weight ratio of the agitating medium to the raw materials is set at 50. Here, the Na/B ratio in Test Example 13 is 1.00. At this reaction step, the inside of the sealed vessel is heated to 330°C with introducing a hydrogen gas, and the mixture is agitated while being rolled and pulverized at the rotation speed of 1150 rpm by means of the agitator in the sealed vessel. The maximum partial pressure of the hydrogen gas at the reaction step is 0.78 MPa. The minimum partial pressure of the hydrogen gas at the reaction step is 0.59 MPa. In Test Example 13, the washing step is omitted. With the procedure described above, the products in Test Example 13 are obtained.

In Test Example 13, products containing aluminum (Al) as the main component are obtained. As described in Table 2, in the products for Test Example 13, sodium metaborate (NaBO₂) and aluminum (Al) are detected as the components for the judgement A. The iota alumina (Na_{0.67}Al₆O_{9.33}) is not detected.

In addition, a high-temperature X-ray diffraction measurement is conducted for the products in Test Example 13 under a nitrogen atmosphere at 600°C; then, sodium metaborate (NaBO₂) and aluminum (Al) are detected as the components for the judgement A, and sodium aluminum borate (Na₂Al₂B₂O₇) is detected as the component for the judgement B, but even in this case, the iota alumina (Na_{0.67}Al₆O_{9.33}) is not detected.

In Test Example 13, the reaction step is conducted at a low temperature of 330°C while being rolled and pulverized, so that the formation of the iota alumina do not occur. Note that in a high-temperature X-ray diffraction measurement of the products in Test Example 13 conducted at 600°C in a nitrogen atmosphere, sodium aluminum borate (Na₂Al₂B₂O₇) is detected. The reason for this is presumed to be due to crystallization of non-crystalline sodium aluminum borate (Na₂Al₂B₂O₇) contained in the products by heating.

### [Test Example 14]

Test Example 14 is an example.

As described in Table 1, the products in Test Example 14 are obtained by washing the products in Test Example 6 with an aqueous solution of 2% by mass of sodium hydroxide (NaOH) at high temperature of 80°C to 100°C both inclusive for 1 hour with stirring, as the washing step.

In Test Example 14, products containing aluminum hydroxide (Al(OH)₃) as the main component are obtained. As can be seen in Table 2, as a result of the semi-quantitative analysis based on the Rietveld method of the X-ray diffraction chart, 38% by mass of the iota alumina (Na_{0.67}Al₆O_{9.33}) and 62% by mass of aluminum hydroxide (Al(OH)₃) are included in the products of Test Example 14.

From the results of Test Example 14, it can be seen that it is possible to produce the iota alumina when the aqueous solution of 2% by mass of sodium hydroxide (NaOH) is used as the solvent at the washing step.

In Test Example 14, the aqueous solution of 2% by mass of sodium hydroxide is used as the solvent at the washing step, resulting in dissolution of extraction residues other than iota alumina (Na_{0.67}Al₆O_{9.33}). Here, aluminum hydroxide (Al(OH)₃) is formed because under a strong basic condition, some of the iota alumina (Na_{0.67}Al₆O_{9.33}) is also dissolved together with aluminum (Al), so that they are precipitated as aluminum hydroxide (Al(OH)₃).

The result of SEM observation of the product in Test Example 14 indicates that 11 iota alumina crystals are extracted from the image area, and the average aspect ratio of the iota alumina crystals is calculated to be 8.3.

### [Test Example 15]

Test Example 15 is a comparative example.

As described in Table 1, 2.94 g of powdered sodium diborate (Na₄B₂O₅), 0.83 g of sodium fluoride (NaF), and 1.28 g of powdered aluminum (Al) are charged as the raw materials into the sealed vessel equipped with the agitator. Here, the Na/B ratio in Test Example 15 is 2.65. At this reaction step, the inside of the sealed vessel is heated to 495°C with introducing a hydrogen gas and with stirring by means of the agitator in the sealed vessel. The maximum partial pressure of the hydrogen gas at the reaction step is 0.86 MPa. The minimum partial pressure of the hydrogen gas at the reaction step is 0.61 MPa. In Test Example 15, the washing step is performed using diglyme. With the procedure described above, the products in Test Example 15 are obtained.

In Test Example 15, products containing sodium aluminum dioxide (NaAlO₂) as the main component are obtained. As can be seen in Table 2, in the products of Test Example 15, sodium aluminum dioxide (NaAlO₂) and sodium fluoride (NaF) are detected as the components for the judgement A, and iota alumina (Na_{0.67}Al₆O_{9.33}) and aluminum (Al) are detected as the components for the judgement B.

In Test Example 15, Na/B is so large as 2.65, which is believed to be resulted in an excess of sodium ions in the reaction system, causing sodium aluminate (NaAlO₂) to be stable and not enough iota alumina (Na_{0.67}Al₆O_{9.33}) to be generated.

### [Test Example 16]

Test Example 16 is a comparative example.

As described in Table 1, 5.85 g of powdered sodium metaborate (NaBO₂) and 9.54 g of powdered aluminum (Al) are charged as the raw materials into the sealed vessel equipped with the agitator. Here, the Na/B ratio in Test Example 16 is 1.00. At this reaction step, the inside of the sealed vessel is heated to 710°C with introducing a hydrogen gas and with stirring by means of the agitator in the sealed vessel. The maximum partial pressure of the hydrogen gas at the reaction step is 1.05 MPa. The minimum partial pressure of the hydrogen gas at the reaction step is 0.89 MPa. In Test Example 16, sublimates are generated due to the high temperature at the reaction step. Therefore, the products that remained in the sealed vessel without sublimation are the products in Test Example 16. In Test Example 16, the washing step is omitted. With the procedure described above, the products in Test Example 16 are obtained.

In Test Example 16, products containing sodium aluminum dioxide (NaAlO₂) as the main component are obtained. As described in Table 2, in the products for Test Example 16, aluminum (Al) is detected as the component for the judgement A; and sodium aluminum dioxide (NaAlO₂) and iota alumina (Na_{0.67}Al₆O_{9.33}) are detected as the component for the judgement B.

In Test Example 16, the temperature at the reaction step is so high as 710°C, resulting in the formation of a large amount of impure sodium aluminum dioxide, which may have reduced the yield of iota alumina.

### [Test Example 17]

Test Example 17 is a comparative example.

As described in Table 1, 17.46 g of powdered sodium metaborate (NaBO₂), 0.28 g of sodium hydroxide (NaOH), 1.86 g of sodium fluoride (NaF), and 11.45 g of powdered aluminum (Al) are used as the raw materials. In Test Example 17, sodium hydroxide (NaOH) and powdered aluminum (Al) are mixed and rubbed together, which is then followed by the reaction at 240°C for 1 hour; then, the resulting mixture, together with powdered sodium metaborate (NaBO₂) and sodium fluoride (NaF), is charged into the sealed vessel equipped with the agitator. Here, the Na/B ratio in Test Example 17 is 1.19. At this reaction step, the inside of the sealed vessel is heated to 450°C with introducing a hydrogen gas and with stirring by means of the agitator in the sealed vessel. The maximum partial pressure of the hydrogen gas at the reaction step is 0.76 MPa. The minimum partial pressure of the hydrogen gas at the reaction step is 0.69 MPa. In Test Example 17, the washing step is performed using pure water at high temperature. With the procedure described above, the products in Test Example 17 are obtained.

In Test Example 17, products containing aluminum (Al) as the main component are obtained. As can be seen in Table 2, in the products of Example 17, as the result of the semi-quantitative analysis of the products in Test Example 17 based on the XRD Rietveld method, 83% by mass of aluminum (Al) is detected as the component for the judgement A; 8% by mass of the iota alumina (Na_{0.67}Al₆O_{9.33}) and 7% by mass of sodium hexafluoroaluminate (Na₃AlF₆) are detected as the components for the judgement B; and 3% by mass of aluminum hydroxide (Al(OH)₃) is detected as the component for the judgement C.

In Test Example 17, the temperature at the reaction step is so low as 450°C; thus, it is presumed that crystallization of the iota alumina do not take place sufficiently.

### [Test Example 18]

Test Example 18 is a comparative example.

As described in Table 1, 17.46 g of powdered sodium metaborate (NaBO₂), 2.06 g of sodium hydroxide (NaOH), and 11.45 g of powdered aluminum (Al) are mixed as the raw materials, and then the resulting mixture is pre-baked at 510°C under a hydrogen gas atmosphere with the pressure of 0.35 MPa for 5 hours. The pre-baked mixture is then charged into the sealed vessel equipped with the agitator. Here, the Na/B ratio in Test Example 18 is 1.19. At this reaction step, the inside of the sealed vessel is heated to 510°C with introducing a hydrogen gas and with stirring by means of the agitator in the sealed vessel. The maximum partial pressure of the hydrogen gas at the reaction step is 0.74 MPa. The minimum partial pressure of the hydrogen gas at the reaction step is 0.69 MPa. In Test Example 18, the washing step is omitted. With the procedure described above, the products in Test Example 18 are obtained.

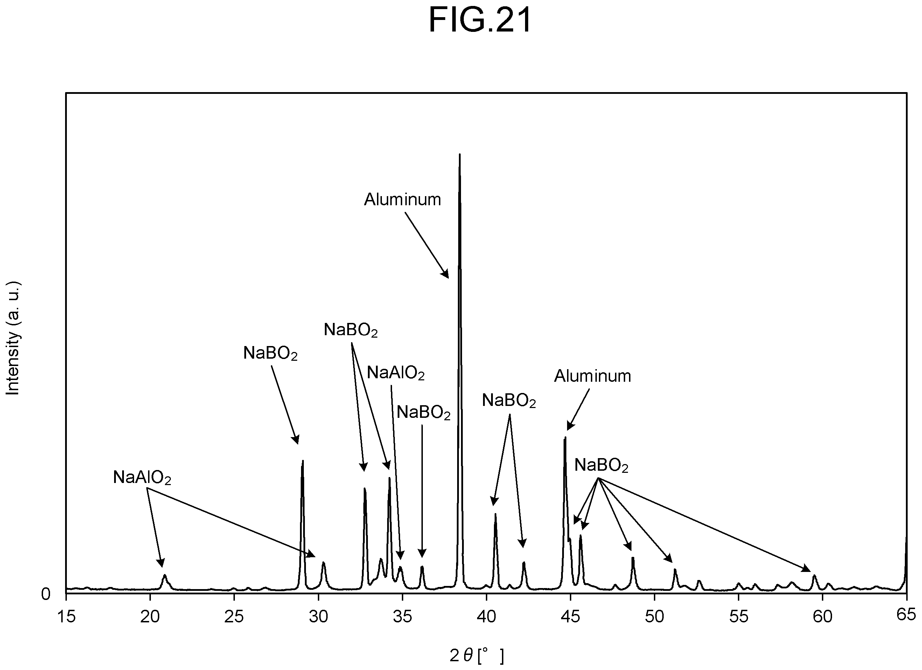

In Test Example 18, products containing aluminum (Al) as the main component are obtained. FIG. 21 is the X-ray diffraction pattern of the products in Test Example 18. As can be seen in Table 2 and FIG. 21, in the products of Test Example 18, sodium fluoride (NaF) and aluminum diboride (AlB₂) are detected as the components for the judgement A, and iota alumina (Na_{0.67}Al₆O_{9.33}) is detected as the component for the judgement B.

In Test Example 18, no fluoride is added, so that the reaction proceeded up to formation of sodium aluminum dioxide (NaAlO₂). It is presumed that crystallization of the iota alumina do not take place sufficiently.

### [Test Example 19]

Test Example 19 is an example.

As described in Table 1, 19.40 g of powdered sodium metaborate (NaBO₂), 2.41 g of sodium fluoride (NaF), and 10.60 g of powdered aluminum (Al) are charged as the raw materials into the sealed vessel equipped with the agitator. Here, the Na/B ratio in Test Example 19 is 1.19. The substance amount of the powdered aluminum (Al) is 100% to the substance amount of the sodium metaborate (NaBO₂). At this reaction step, the inside of the sealed vessel is heated to 580°C with introducing a hydrogen gas and with stirring by means of the agitator in the sealed vessel. The maximum partial pressure of the hydrogen gas at the reaction step is 0.81 MPa. The minimum partial pressure of the hydrogen gas at the reaction step is 0.78 MPa. In Test Example 19, the washing step is performed using pure water at high temperature for 60 minutes. With the procedure described above, the products in Test Example 19 are obtained.

In Test Example 19, products containing iota alumina (Na_{0.67}Al₆O_{9.33}) as the main component are obtained. As can be seen in Table 2, as the result of the semi-quantitative analysis of the products of Test Example 19 based on the XRD Rietveld method, 36% by mass of the iota alumina (Na_{0.67}Al₆O_{9.33}) and 64% by mass of aluminum hydroxide (Al(OH)₃) are detected as the components for the judgement A.

From the results of Test Example 19, it can be seen that it is possible to produce the iota alumina when the heating temperature is made 580°C. Aluminum (Al) and sodium hexafluoroaluminate (Na₃AlF₆) are not detected, presumably because sodium metaborate (NaBO₂) remaining in the product during the washing step dissolved in water thereby resulting in a basic solution similarly to the case of Test Example 14.

### [Test Example 20]

Test Example 20 is an example.

As described in Table 1, 19.40 g of powdered sodium metaborate (NaBO₂), 2.41 g of sodium fluoride (NaF), and 10.60 g of powdered aluminum (Al) are charged as the raw materials into the sealed vessel equipped with the agitator. Here, the Na/B ratio in Test Example 20 is 1.19. The substance amount of the powdered aluminum (Al) is 100% to the substance amount of the sodium metaborate (NaBO₂). At this reaction step, the inside of the sealed vessel is heated to 610°C with introducing a hydrogen gas and with stirring by means of the agitator in the sealed vessel. The maximum partial pressure of the hydrogen gas at the reaction step is 0.81 MPa. The minimum partial pressure of the hydrogen gas at the reaction step is 0.78 MPa. In Test Example 20, the washing step is performed using pure water at a normal temperature of 22°C.

With the procedure described above, the products in Test Example 20 are obtained.

In Test Example 20, products containing aluminum (Al) as the main component are obtained. As can be seen in Table 2, as the result of the semi-quantitative analysis of the products of Test Example 20 based on the XRD Rietveld method, 59% by mass of aluminum (Al) and 28% by mass of the iota alumina (Na_{0.67}Al₆O_{9.33}) are detected as the components for the judgement A; 9% by mass of sodium hexafluoroaluminate (Na₃AlF₆) is detected as the component for the judgement B; and 5% by mass of aluminum diboride (AlB₂) is detected as the component for the judgement C.

From the results of Test Example 20, it can be seen that it is possible to produce the iota alumina when the heating temperature is made 610°C.

Here, unlike in Test Example 19, aluminum hydroxide (Al(OH)₃) is not generated. This is presumably because the reaction temperature is so high as 610°C that the raw material sodium metaborate changed to neutral oxides containing aluminum during the reaction, resulting in a not so strong basic aqueous solution at the washing step.

### [Test Example 21]

Test Example 21 is an example.

As described in Table 1, 17.46 g of powdered sodium metaborate (NaBO₂), 2.42 g of sodium fluoride (NaF), and 11.45 of powdered aluminum (Al) are charged as the raw materials into the sealed vessel equipped with the agitator. Here, the Na/B ratio in Test Example 21 is 1.22. At this reaction step, the inside of the sealed vessel is heated to 510°C with introducing a hydrogen gas and with stirring by means of the agitator in the sealed vessel. The maximum partial pressure of the hydrogen gas at the reaction step is 0.84 MPa. The minimum partial pressure of the hydrogen gas at the reaction step is 0.78 MPa. In Test Example 21, the washing step is performed using pure water at a high temperature of 100°C for 60 minutes.

With the procedure described above, the products in Test Example 21 are obtained.

In Test Example 21, products containing the iota alumina (Na_{0.67}Al₆O_{9.33}) as the main component are obtained. As can be seen in Table 2, as the results of the semi-quantitative analysis of the products of Test Example 21 based on the XRD Rietveld method, 80% by mass of the iota alumina (Na_{0.67}Al₆O_{9.33}) is detected as the component for the judgement A, and 20% by mass of aluminum hydroxide (Al(OH)₃) is detected as the component for the judgement B.

From the results of Test Example 21, it can be seen that it is possible to produce the iota alumina when the heating temperature is made 510°C.

In Test Example 21, at the washing step, the water became basic due to the remaining sodium metaborate (NaBO₂) in the products, thereby dissolving aluminum (Al) at a high temperature of 100°C, generating aluminum hydroxide (Al(OH)₃), and then resulting in dissolution of sodium hexafluoroaluminate (Na₃AlF₆), too.

### [Test Example 22]

Test Example 22 is an example.

As described in Table 1, 17.46 g of powdered sodium metaborate (NaBO₂), 2.42 g of sodium fluoride (NaF), and 11.45 of powdered aluminum (Al) are charged as the raw materials into the sealed vessel equipped with the agitator. Here, the Na/B ratio in Test Example 22 is 1.22. At this reaction step, the inside of the sealed vessel is heated to 510°C with introducing a hydrogen gas and with stirring by means of the agitator in the sealed vessel. The maximum partial pressure of the hydrogen gas at the reaction step is 0.84 MPa. The minimum partial pressure of the hydrogen gas at the reaction step is 0.78 MPa. In Test Example 22, the washing step is performed using pure water at a normal temperature of 25°C for 60 minutes.

With the procedure described above, the products in Test Example 22 are obtained.

In Test Example 22, products containing the iota alumina (Na_{0.67}Al₆O_{9.33}) as the main component are obtained. As can be seen in Table 2, as a result of the semi-quantitative analysis of the products of Test Example 22 based on the XRD Rietveld method, 79% by mass of the iota alumina (Na_{0.67}Al₆O_{9.33}) is detected as the component for the judgement A, and 16% by mass of aluminum (Al) and 6% by mass of sodium hexafluoroaluminate (Na₃AlF₆) are detected as the components for the judgement B.

From the results of Test Example 22, it can be seen that it is possible to take out the iota alumina (Na_{0.67}Al₆O_{9.33}) even when the temperature of the polar solvent used at the washing step is made normal temperature.

### Components for the Judgement A

In Test Example 22, although alkalization of water due to dissolution of remaining sodium metaborate (NaBO₂) in the product occurs at the washing step at normal temperature, the dissolution reaction of aluminum is sluggish because of the normal temperature, thereby presumably suppressing the formation of aluminum hydroxide (Al(OH)₃).

### [Test Example 23]

Test Example 23 is an example.

As described in Table 1, 17.46 g of powdered sodium metaborate (NaBO₂), 2.42 g of sodium fluoride (NaF), and 11.45 of powdered aluminum (Al) are charged as the raw materials into the sealed vessel equipped with the agitator. Here, the Na/B ratio in Test Example 23 is 1.22. At this reaction step, the inside of the sealed vessel is heated to 510°C with introducing a hydrogen gas and with stirring by means of the agitator in the sealed vessel. The maximum partial pressure of the hydrogen gas at the reaction step is 0.84 MPa. The minimum partial pressure of the hydrogen gas at the reaction step is 0.78 MPa. In Test Example 23, the washing step is performed using 50 ml of an aqueous hydrochloric acid with concentration of 0.24 mol/L (0.875% by mass) at normal temperature for 60 minutes. The pH after washing is 6.

With the procedure described above, the products in Test Example 23 are obtained.

In Test Example 23, products containing the iota alumina (Na_{0.67}Al₆O_{9.33}) as the main component are obtained. As can be seen in Table 2, as the result of the semi-quantitative analysis of the products of Test Example 23 based on the XRD Rietveld method, 78% by mass of the iota alumina (Na_{0.67}Al₆O_{9.33}) is detected as the component for the judgement A, and 17% by mass of aluminum (Al) and 4% by mass of sodium hexafluoroaluminate (Na₃AlF₆) are detected as the components for the judgement B.

From the results of Test Example 23, it can be seen that it is possible to take out the iota alumina even when the water used at the washing step is made acidic.

In Test Example 23, washing with the 0.24 mol/L hydrochloric acid (HCl) at normal temperature resulted in the pH of 6 due to a neutralization reaction with the remaining sodium metaborate (NaBO₂) in the reaction products. Because of this, dissolution of aluminum do not occur at the washing step, so that it is presumed that the formation of aluminum hydroxide (Al(OH)₃) is suppressed thereby resulting in slight decrease in sodium hexafluoroaluminate (Na₃AlF₆)

### [Test Example 24]

Test Example 24 is a comparative example.

As described in Table 1, 7.24 g of powdered potassium metaborate (KBO₂), 1.00 g of potassium fluoride (KF), and 3.82 g of powdered aluminum (Al) are charged as the raw materials into the sealed vessel equipped with the agitator. Here, the K/B ratio in Test Example 24 is 1.19. The substance amount of the powdered aluminum (Al) is 160% to the substance amount of the potassium metaborate (KBO₂). At this reaction step, the inside of the sealed vessel is heated to 522°C with introducing a hydrogen gas and with stirring by means of the agitator in the sealed vessel. The maximum partial pressure of the hydrogen gas at the reaction step is 0.78 MPa. The minimum partial pressure of the hydrogen gas at the reaction step is 0.68 MPa. In Test Example 24, the washing step is omitted. With the procedure described above, the products in Test Example 24 are obtained.

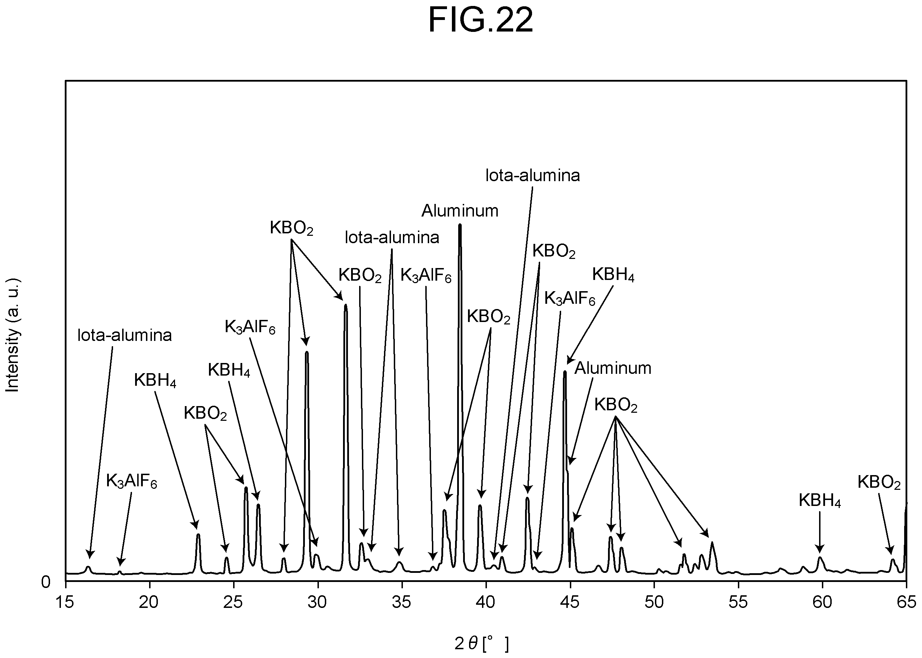

FIG. 22 is the X-ray diffraction pattern of the products in Test Example 24. In Test Example 24, products containing potassium metaborate (KBO₂) as the main component are obtained. As can be seen in Table 2 and FIG. 22, in the products in Test Example 24, potassium metaborate (KBO₂) and aluminum (Al) are detected as the components for the judgement A, and iota alumina (K_{0.67}Al₆O_{9.33}), potassium borohydride (KBH₄), and potassium hexafluoroaluminate (K₃AlF₆) are detected as the components for the judgement B.

From the results of Test Example 24, it can be seen that it is possible to produce the iota alumina (K_{0.67}Al₆O_{9.33}), even when potassium is used in place of sodium as the alkali metal.

### [Test Example 25]

Test Example 25 is an example.

As described in Table 1, 7.24 g of powdered potassium metaborate (KBO₂), 1.00 g of potassium fluoride (KF), and 3.82 g of powdered aluminum (Al) are charged as the raw materials into the sealed vessel equipped with the agitator. Here, the K/B ratio in Test Example 25 is 1.19. The substance amount of the powdered aluminum (Al) is 160% to the substance amount of the potassium metaborate (KBO₂). At this reaction step, the inside of the sealed vessel is heated to 522°C with introducing a hydrogen gas and with stirring by means of the agitator in the sealed vessel. The maximum partial pressure of the hydrogen gas at the reaction step is 0.78 MPa. The minimum partial pressure of the hydrogen gas at the reaction step is 0.68 MPa. In Test Example 25, the washing step is performed using pure water at normal temperature. With the procedure described above, the products in Test Example 25 are obtained.

In Test Example 25, products containing iota alumina (K_{0.67}Al₆O_{9.33}), as the main component are obtained. As can be seen in Table 2, in the products of Test Example 25, 35% by mass of aluminum (Al) and 36% by mass of iota alumina (K_{0.67}Al₆O_{9.33}), are detected as the components for the judgement A, and 14% by mass of sodium hexafluoroaluminate (K₃AlF₆) and 15% by mass of aluminum hydroxide (Al(OH)₃) are detected as the components for the judgement B.

From the results of Test Example 25, it can be seen that it is possible to produce the iota alumina (K_{0.67}Al₆O_{9.33}), even when potassium is used in place of sodium as the alkali metal.

### Industrial Applicability

As of July 2022, the iota alumina (Na_{0.67}Al₆O_{9.33}) or (K_{0.67}Al₆O_{9.33}), has never been mass produced and is not available even as a reagent. This is due to the lack of a production method of a high-purity product with a low cost. According to the present method, using the principle that the iota alumina (Na_{0.67}Al₆O_{9.33}) is produced from sodium aluminum dioxide (NaAlO₂) by the catalytic action of a fluorine ion, it is possible to produce a needle-like (whisker-like) iota alumina (Na_{0.67}Al₆O_{9.33}) together with sodium borohydride (NaBH₄), which is a valuable material, by heating aluminum, sodium borates, and a hydrogen gas, which are inexpensive raw materials. The inexpensive iota alumina (Na_{0.67}Al₆O_{9.33}) can be used as a raw material for producing beta alumina (β Alumina and β" Alumina). The needle-like (whisker-like) iota alumina (Na_{0.67}Al₆O_{9.33} or K_{0.67}Al₆O_{9.33}) can also be used as a composite material to increase the strength of a resin and a metal.

### Reference Signs List

- 10A to 10D: sealed vessel
- 12, 12b: vessel main body
- 14: lid
- 16: heater
- 18: O-ring
- 20: motor
- 22: agitator rod
- 22A: stirrer
- 24: first pipe
- 26: Hydrogen gas supply valve
- 28: exhaust valve
- 30: second pipe
- 32: pressure gauge
- 35: scraper
- 36: ribbon-shaped scraper
- 37: wide paddle stirrer
- 51: powdered sodium borate
- 52: powdered aluminum
- 54: powdered fluoride
- 55: powdered sodium hydroxide
- 101: Aluminum particle
- 101a: Aluminum particle surface
- 101b: Aluminum oxide film
- 101c: iota alumina (Na_{0.67}Al₆O_{9.33})
- 102: Sodium metaborate (NaBO₂)
- 103: Sodium fluoride (NaF)
- 106: Sodium aluminum dioxide (NaAlO₂)
- 111: Sodium borohydride (NaBH₄)
- 112: Sodium hydride (NaH)
- 113: Sodium oxide (Na₂O)
- 115: Reactant layer (sodium borohydride (NaBH₄) 111, sodium hydride (NaH) 112)
- 117: Reducing substance (presumably lower aluminum fluoride = AlF_{1.5})

## Claims

1. A method for producing an iota alumina comprising:
a reaction step at which solid raw materials including an alkali metal compound, a fluoride, and at least one or more selected from an aluminum compound and aluminum are mixed and heat-treated; and
a washing step at which a product generated at the reaction step is charged into a polar solvent.

2. The method for producing an iota alumina according to claim 1, wherein the alkali metal compound is at least one or more selected from sodium aluminum dioxide (NaAlO₂), sodium borates, sodium hydride (NaH), sodium borohydride (NaBH₄), sodium oxide (Na₂O), potassium aluminum dioxide (KAlO₂), potassium borates, potassium hydride (KH), potassium borohydride (KBH₄), and potassium oxide (K₂O).

3. The method for producing an iota alumina according to claim 2, wherein the sodium borates are at least one or more selected from sodium metaborate (NaBO₂), sodium tetraborate (Na₂B₄O₇), and sodium diborate (Na₄B₂O₅).

4. The method for producing an iota alumina according to claim 2, wherein the potassium borates are at least one or more selected from potassium metaborate (KBO₂), potassium tetraborate (K₂B₄O₇), and potassium diborate (K₄B₂O₅).

5. The method for producing an iota alumina according to claim 1, wherein the fluoride is at least one or more selected from sodium fluoride (NaF), sodium hexafluoroaluminate (Na₃AlF₆), potassium fluoride (KF), potassium aluminum fluoride (KAlF₄), potassium hexafluoroaluminate (K₃AlF₆), aluminum fluoride (AlF₃), and lithium fluoride (LiF).

6. The method for producing an iota alumina according to claim 1, wherein the aluminum compound is at least one or more selected from sodium aluminum dioxide (NaAlO₂), potassium aluminum dioxide (KAlO₂), alumina (Al₂O₃), and aluminum fluoride (AlF₃).

7. The method for producing an iota alumina according to claim 1, wherein the polar solvent is water.

8. An iota alumina having a rod-like or needle-like crystal.

9. The iota alumina according to claim 8, wherein an average aspect ratio of a crystal of the iota alumina is 3 to 30 both inclusive.
